(19) Europäisches Patentamt
European Patent Office
Office européen des brevets

(11) **EP 1 550 082 B1**

(12) **EUROPEAN PATENT SPECIFICATION**

(45) Date of publication and mention
of the grant of the patent:
**06.01.2010 Bulletin 2010/01**

(21) Application number: **03753889.9**

(22) Date of filing: **07.10.2003**

(51) Int Cl.:
*G06K 9/00* (2006.01)        *G06T 15/00* (2006.01)

(86) International application number:
**PCT/IL2003/000805**

(87) International publication number:
**WO 2004/032061 (15.04.2004 Gazette 2004/16)**

(54) **THREE DIMENSIONAL FACE RECOGNITION**

DREIDIMENSIONALE GESICHTSERKENNUNG

RECONNAISSANCE DE VISAGE TRIDIMENSIONNELLE

(84) Designated Contracting States:
**AT BE BG CH CY CZ DE DK EE ES FI FR GB GR HU IE IT LI LU MC NL PT RO SE SI SK TR**

(30) Priority: **07.10.2002  US 416243 P**
**31.10.2002  US 284281**

(43) Date of publication of application:
**06.07.2005  Bulletin 2005/27**

(73) Proprietor: **TECHNION RESEARCH AND DEVELOPMENT FOUNDATION, LTD.**
**Haifa 32000 (IL)**

(72) Inventors:
• **BRONSTEIN, Alexander**
**34 731 Haifa (IL)**
• **BRONSTEIN, Michael**
**34 731 Haifa (IL)**
• **KIMMEL, Ron**
**34 672 Haifa (IL)**

(74) Representative: **Machtalère, Georges et al**
**Dennemeyer & Associates S.A.**
**55, rue des Bruyères**
**1274 Howald (LU)**

(56) References cited:
**US-A- 5 181 259     US-B1- 6 556 196**

• **ELAD A ET AL: "Bending invariant representations for surfaces" PROCEEDINGS 2001 IEEE CONFERENCE ON COMPUTER VISION AND PATTERN RECOGNITION. CVPR 2001. KAUAI, HAWAII, DEC. 8 - 14, 2001, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 1 OF 2, 8 December 2001 (2001-12-08), pages 168-174, XP010583743 ISBN: 0-7695-1272-0**
• **MING-SHING SU ET AL: "An automatic construction of a person's face model from the person's two orthogonal views" GEOMETRIC MODELING AND PROCESSING, 2002. PROCEEDINGS 10-12 JULY 2002, PISCATAWAY, NJ, USA,IEEE, 10 July 2002 (2002-07-10), pages 179-186, XP010599553 ISBN: 0-7695-1674-2**
• **KIMMEL R ET AL: "Texture mapping using surface flattening via multidimensional scaling" IEEE TRANSACTIONS ON VISUALIZATION AND COMPUTER GRAPHICS, IEEE SERVICE CENTER, LOS ALAMITOS, CA, US, vol. 8, no. 2, April 2002 (2002-04), pages 198-207, XP011094455 ISSN: 1077-2626**

**Description**

FIELD AND BACKGROUND OF THE INVENTION

The present invention relates to a method and apparatus for three-dimensional face recognition and, more particularly, but not exclusively to such a method and apparatus that both obtains a 3D representation of a face and uses that representation for matching purposes.

Face recognition has recently become an important task of computer vision, and is needed in a wide range of biometric and security applications. However, most existing face recognition systems are reported to be sensitive to image acquisition conditions such as head position, illumination, etc. and can therefore be inaccurate and easily fooled. Reference is made to American Civil Liberties Union (ACLU) of Florida, *Press Release*, 14 May 2002, Available: http://www.aclufl.org/pbfaceitresults051402.html.

In general, modem face recognition approaches can be divided into two wide categories: 2D approaches, using only image information (which can be either grayscale or color), and 3D approaches, which incorporate three-dimensional information as well.

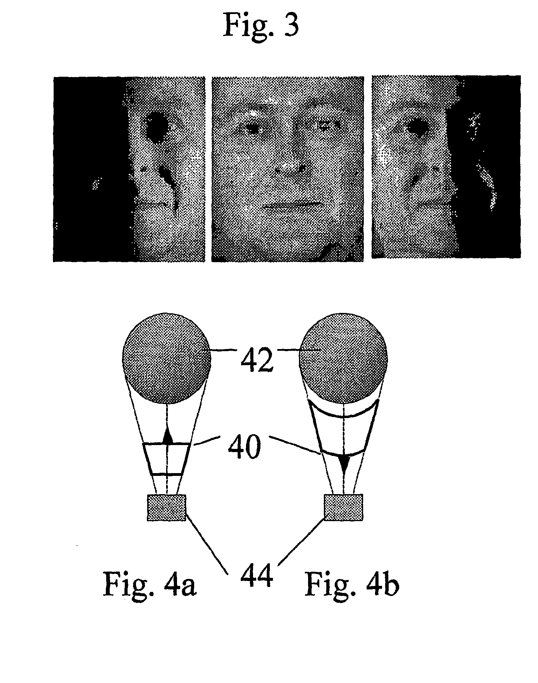

While simpler in data acquisition (which permits real-time surveillance applications, such as face recognition from a video-taped crowd in pubic places), the 2D approach suffers from sensitivity to illumination conditions and head rotation. Since the image represents the light reflected from the facial surface at a single observation angle, different illumination conditions can result in different images, which are likely to be recognized as different subjects (see Figure 3). One of the classical 2D face recognition algorithms is the Turk and Pentland eigenfaces algorithm. For a full discussion see M. Turk and A. Pentland, Face recognition using eigenfaces, CVPR, May 1991, pp. 586-591, and M. Turk and A. Pentland, "Face recognition system, US Patent 5,164,992, 17 Nov 1990. The Eigenfaces algorithm works as follows: Given a set of faces arising from some statistical distribution, the principal components of this distribution form a set of features that characterize the variation between faces. "Eigenfaces" are the eigenvectors of the set of "all" faces. The eigenface approach treats face recognition as a 2D classification problem, without taking into consideration the significant difference in the images resulting from illumination conditions and head rotation. For this reason, eigenfaces usually produce mediocre results when faced with real life rather than laboratory conditions.

The 3D approach provides face geometry information, and face geometry information is independent of viewpoint and lighting conditions. Thus such information is complementary to the 2D image. 3D information, however, not only carries the actual facial geometry, but includes depth information which allows easy segmentation of the face from the background.

Gordon showed that combining frontal and profile views can improve the recognition accuracy and reference is made to G. Gordon, "Face recognition from frontal and profile views", Proc. of the International Workshop on Face and Gesture Recognition, Zurich, Switzerland, pp. 47-52, Jun 1995.

Beumier and Acheroy show the adequacy of using geometric information in the rigid face profile for subject identification in a system using structured light for 3D acquisition, and reference is made to C. Beumier and M. P. Acheroy, Automatic Face Identification, Applications of Digital Image Processing XVIII, SPIE, vol. 2564, pp. 311-323, July 1995.

The above described approach may be generalized to the whole surface, and reference is made to C. Beumier and M. P. Acheroy, Automatic Face Authentication from 3D Surface, British Machine Vision Conference BMVC 98, University of Southampton UK, 14-17 Sep, 1998, pp 449-458.", 1998, , who describe such a generalization using global surface matching. However, surface matching is sensitive to facial expressions and cannot be considered a comprehensive solution.

There is thus a widely recognized need for, and it would be highly advantageous to have, a facial recognition system that uses three-dimensional information but is devoid of the above limitations such as being sensitive to facial expressions, lighting of the subject, or to angle.

SUMMARY OF THE INVENTION

The present invention obtains a canonical form representation of 3-D facial data and uses that canonical representation to compare with other faces.

According to one aspect of the present invention there is provided Apparatus for processing 3-dimensional data of a geometric body for matching, wherein said geometric body is a face, having soft geometric regions, being regions of said face susceptible to short term geometric changes, and hard geometric regions, being regions substantially insusceptible to said short term geometric changes, said apparatus comprising:

> a geodesic converter, for receiving an input comprising 3-dimensional topographical data of said geometric body, and for converting said data into a series of geodesic distances between pairs of points of said data;
> a triangulator connected prior to said geodesic converter to receive said 3-dimensional topographical data and to form therefrom a manifold by triangulation, said manifold being used as said input of said geodesic converter;
a multi-dimensional scaler, connected subsequently to said geodesic converter, for forming a low dimensional Euclidean representation of said series of geodesic distances, said low dimensional Euclidean representation providing a bending invariant representation of said geometric body suitable for matching with other geometric shapes;
a subsampler located after said triangulator and prior to said geodesic converter, configured to subsample said triangulated manifold, and to provide to said geodesic converter a subsampled triangulated manifold:

a preprocessor, located prior to said subsampler, for removing said soft geometric regions from said face, wherein said preprocessor is operable to carry out removal of said soft regions by application of a geodesic mask.

The apparatus preferably comprises a subsampler located prior to said geodesic converter, configured to subsample said triangulated manifold, and to provide to said geodesic converter a subsampled triangulated manifold.

Preferably, said manifold comprises a plurality of vertices and said subsampler is operable to select a first vertex and to iteratively select a next vertex having a largest geodesic distance from vertices already selected, until a predetermined number of vertices has been selected.

Preferably, said subsampler is operable to use the fast marching method for triangulated domains to calculate geodesic distances between vertices for said iterative selection.

Preferably, said geometric body is a face, having soft geometric regions, being regions of said face susceptible to short term geometric changes, and hard geometric regions, being regions substantially insusceptible to said short term geometric changes, said apparatus comprising a preprocessor, located prior to said subsampler, for removing said soft geometric regions from said face.

Preferably, said preprocessor is operable to identify said soft regions by identification of an orientation point on said face.

Preferably, said orientation point is at least one of a nose tip, a pair of eyeball centers and a mouth center.

Preferably, said preprocessor is further operable to center said face.

Preferably, said preprocessor is further operable to crop said face.

Preferably, said preprocessor is operable to carry out removal of said soft regions by application of a geodesic mask.

Preferably, said geodesic converter is operable to use the fast marching method for triangulated domains to calculate said geodesic distances.

The apparatus preferably comprises a triangulator for forming said triangulated manifold from scan data of a geometric body.

The apparatus may further be operable to embed said triangulated manifold into a space of higher than two dimensions, thereby to include additional information with said topographical information.

Preferably, said additional information is any one of a group comprising texture information, albedo information, grayscale information, and color information. In the case of texture information, the texture can be extracted from the initial scan, and subsequently mapped onto the low dimensional Euclidian representation. Subsequently separate coefficients for the topographical and texture information can be used to contribute to a weighted distance to another surface in the matching process.

Preferably, said subsampler comprises an optimizer for allowing a user to select an optimum subsampling level by defining a trade-off between calculation complexity and representation accuracy.

Preferably, said multi-dimensional scalar is configured such that said Euclidean representation comprises a predetermined number of eigenvalues extractable to be used as co-ordinates in a feature space.

Preferably, said predetermined number of eigenvalues is at least three, and said feature space has a number of dimensions corresponding to said predetermined number.

According to an embodiment of the present invention there is provided apparatus for matching between geometric bodies based on 3-dimensional data comprising:

an input for receiving representations of geometric bodies as Euclidean representations of sets of geodesic distances between sampled points of a triangulated manifold, said Euclidean representations being substantially bending invariant representations,
a distance calculator for calculating distances between respective geometric bodies based on said Euclidean representation and
a thresholder for thresholding a calculated distance to determine the presence or absence of a match.

Preferably, said distance calculator comprises:

an eigenvalue extractor for extracting a predetermined number of eigenvalues from said Euclidean representations, and

a plotter for plotting said predetermined number of eigenvalues as a point on a feature space having a dimension for each of said predetermined number of Eigenvalues,

and wherein said thresholder is configured to be sensitive to clustering within said feature space, thereby to determine said presence or absence of said match.

Preferably, said predetermined number is three.

Preferably, said Euclidean representation is based upon geodesic distances between a subsampling of points of said triangulated manifold.

Preferably, said geometric body is a face, having soft geometric regions, being regions susceptible to short term geometric change and hard geometric regions, being regions substantially insusceptible to short term geometric changes, and wherein said Euclidian representation is substantially limited to said hard geometric regions.

Preferably, said distance calculator is configured to use the Hausdorff metric.

According to a third aspect of the present invention there is provided apparatus for obtaining 3-dimensional data of a geometric body for matching, and using said data to carry out matching between different bodies wherein said geometric body is a face, having soft geometric regions and hard geometric regions, said apparatus comprising:

a three dimensional scanner for obtaining three-dimensional topographical data of said body;

a triangulator for receiving said three-dimensional topographical data of said geometric body and forming said data into a triangulated manifold;

a geodesic converter, connected subsequently to said triangulator, for converting said triangulated manifold into a series of geodesic distances between pairs of points of said manifold;

a multi-dimensional scaler, connected subsequently to said geodesic converter, for forming a low dimensional Euclidean representation of said series of geodesic distances, said low dimensional Euclidean representation providing a bending invariant representation of said geometric body;

a distance calculator, connected subsequently to said multi-dimensional scaler, for calculating distances between geometric bodies based on said Euclidean representation;

a thresholder, connected subsequently to said distance calculator, for thresholding a calculated distance to determine the presence or absence of a match;

a subsampler located between said triangulator and said geodesic converter, configured to subsample said triangulated manifold, and to provide to said geodesic converter a subsampled triangulated manifold; and

a preprocessor, located between said triangulator and said subsampler, for removing said soft geometric regions from said face; wherein said preprocessor is operable to carry out removal of said soft regions by application of a geodesic mask.

Preferably, said distance calculator comprises:

an eigenvalue extractor for extracting a predetermined number of eigenvalues from said Euclidean representations, and

a plotter for plotting said predetermined number of Eigenvalues as a point on a feature space having a dimension for each of said predetermined number of eigenvalues,

and wherein said thresholder is configured to be sensitive to clustering within said feature space, thereby to determine said presence or absence of said match.

Preferably, said predetermined number is three.

Alternatively, said predetermined number is greater than three.

The apparatus preferably comprises a subsampler located between said triangulator and said geodesic converter, configured to subsample said triangulated manifold, and to provide to said geodesic converter a subsampled triangulated manifold.

Preferably, said subsampler is operable to use geodesic distances in selecting points from said triangulated manifold to include in said subsampled triangulated manifold.

Preferably, said subsampler is configured to take an initial point and then iteratively to select points by taking points furthest away in terms of a geodesic distance from already selected points.

Preferably, said geometric body is a face, having soft geometric regions and hard geometric regions, said apparatus comprising a preprocessor, located between said triangulator and said subsampler, for removing said soft geometric regions from said face.

Preferably, said geometric body is a face, having soft geometric regions and hard geometric regions, said apparatus comprising a preprocessor, located between said triangulator and said geodesic converter, for removing said soft geometric regions from said face.

Preferably, said preprocessor is operable to identify said soft regions by identification of an orientation point on said face.

Preferably, said orientation point is a nose tip.

Preferably, said preprocessor is further operable to center said face.

Preferably, said preprocessor is further operable to crop said face.

Preferably, said preprocessor is operable to carry out removal of said soft regions by application of a geodesic mask.

Preferably, said geodesic converter is operable to use the fast marching method for triangulated domains to calculate said geodesic distances.

Preferably, said subsampler comprises an optimizer for allowing a user to select an optimum subsampling level by defining a trade-off between calculation complexity and representation accuracy.

Preferably, said distance calculator is configured to use the Hausdorff metric.

According to a fourth aspect of the present invention there is provided a method of image preprocessing of three-dimensional topographical data for subsequent classification, wherein said geometric body is a face, having soft geometric regions and hard geometric regions, the method comprising:

> providing said three-dimensional topographical data as a three-dimensional triangulated manifold,
> subsampling said triangulated manifold,
> generating a matrix of geodesic distances to selected vertices of said manifold,
> removing said soft geometric regions from said face by application of a geodesic mask; and
> using multi-dimensional scaling to reduce said matrix to a canonical representation in a low-dimensional Euclidean space, thereby to provide a representation suitable for subsequent classification.

The method may further comprise selecting said vertices for generating said matrix of geodesic distances by a procedure comprising iteratively selecting a next vertex having a largest geodesic distance from vertices already selected, until a predetermined number of vertices has been selected.

The method may further comprise determining geodesic distances for said procedure using the fast marching method for triangulated domains.

Preferably, said three-dimensional topographical data is a representation of a face, and further comprising cropping said face to exclude parts of said face being susceptible to short term changes, thereby to render said subsequent classification substantially invariant to said short term changes.

According to a fifth aspect of the present invention there is provided a method of classifying images of three-dimensional bodies, , wherein said three dimensional bodies comprise faces having soft geometric regions and hard geometric regions, the method comprising:

> obtaining representations of said three dimensional bodies as canonical form representations derived from geodesic distances between selected sample points taken from surfaces of said three dimensional bodies;
> removing said soft geometric regions from said face by application of a geodesic mask;
> from each representation deriving co-ordinates on a feature space; and
> classifying said bodies according to clustering on said feature space.

Preferably, n is at least three.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing selected tasks or steps manually, automatically, or as a combination thereof. Moreover, according to actual instrumentation and equipment of preferred embodiments of the method and system of the present invention, one or more steps could be implemented by hardware or by software on any operating system of any firmware or a combination thereof. For example, as hardware, selected steps of the invention could be implemented as a chip or a circuit As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

FIG. 1 is a simplified block diagram showing a preferred embodiment of a device for gathering 3D topographical data of a body and processing the data into a canonical form representation for efficient matching, according to a first preferred embodiment of the present invention;

FIG. 2 is a simplified diagram of apparatus for receiving 3D topographical data in canonical form representation and for carrying out matching or classification, according to a second preferred embodiment of the present invention;

FIG. 3 is a series of 2D representations of a single face, each taken under different lighting conditions. The faces are clearly the same to the human observer but are very difficult to match using conventional image analysis techniques;

FIG. 4a is a simplified schematic diagram showing a first stage of 3D data gathering using depth code illumination;

FIG. 4b is a simplified schematic diagram showing a second stage of 3D data gathering using depth code illumination;

FIG. 5 is a photograph showing a 3D scanner arrangement comprising a video camera and a moving laser projector;

FIG. 6 is a simplified schematic diagram illustrating a photometric stereo acquisition scheme;

FIG. 7 is a triangulated manifold representation using data points gathered by 3D scanning of a face;

FIG. 8 is a simplified diagram showing the manifold of Fig. 7 after subsampling;

FIG. 9 is a simplified block diagram showing in greater detail the subsampler of Fig. 1;

FIG. 10 is a simplified block diagram showing in greater detail the geodesic converter of Fig. 1;

FIG. 11 is a simplified flow chart showing operation of a preferred embodiment of the present invention;

FIG. 12 is a simplified flow chart showing in greater detail the subsampling stage of FIG. 11;

FIG. 13 is a database of six faces, used as the subject of the first experiment;

FIG. 14 shows one of the faces of FIG. 1, a variation of the face to simulate change in expression, and a further variation to illustrate a change in a major feature;

FIG. 15 is a graph showing results of the first experiment plotted onto a 3-dimensional feature space. Faces differing only by a change in expression form a cluster on the feature space whereas faces differing by a change in a major feature are distant;

FIG. 16 illustrates nine different illuminations of a given face and their reconstruction, using photometric stereo, into a manifold by solution of the Poisson equation;

FIG. 17 is a set of ten faces each reconstructed using least squares from nine facial illuminations of a different subject for use in the second experiment;

FIG. 18 is a set of images of a single subject each with a different pose, for use in experiment II;

FIG. 19 is a graph showing results of the second experiment, plotted on a 3-dimensional feature space. Different poses of the same subject form clusters;

FIG. 20 is a schematic diagram illustrating an alignment process of two facial surfaces;

FIG. 21 is a graph showing the results of the third experiment without alignment, plotted on a three-dimensional feature space. No recognizable clusters appear;

FIG. 22 is a graph showing the results of the third experiment carried out with optimal alignment, plotted on a three-dimensional feature space. Clustering is present but indistinct;

FIG. 23 is a set of three faces from a further database, the faces used as subjects for the fourth experiment;

FIG. 24 is a set of three poses of a face of FIG. 23, also for use in the fourth experiment;

FIG. 25 shows a texture map of a face before application of a mask as part of preprocessing;

FIG. 26 shows the texture map of FIG. 25 after application of a geodesic mask;

FIG. 27 shows a depth map of a face before application of a mask as a part of preprocessing;

FIG. 28 shows the depth map of FIG. 27 after application of a geodesic mask;

FIG. 29 shows a triangulated manifold as obtained directly from 3D topographical image data;

FIG. 30 shows the manifold of FIG. 29 following subsampling;

FIG. 31 shows the manifold of FIG. 29 reduced to canonical form;

FIG. 32 is a simplified diagram illustrating viewing and illumination angles for 3D data acquisition;

FIG. 33 is a simplified diagram illustrating the relationship between surface gradient and local stripe direction;

FIG. 34 is a simplified diagram illustrating mapping of a Cartesian co-ordinate system onto a 3-dimensional manifold;

FIG. 35 is a simplified diagram illustrating the process of selection of additional vertices from which to measure geodesic distances;

FIG. 36 shows a series of the same face illuminated from different angles;

FIG. 37A is a simplified block diagram illustrating apparatus for processing 3D representations of faces and performing matching of the processed results without forming the 3D surface as an intermediate step, according to a preferred embodiment of the present invention;

FIG. 37B is a simplified flow chart illustrating a sequence of operations involved in use of the apparatus of Fig. 37A;

FIG. 38 is a simplified diagram illustrating three stages in the processing of gathered face information, initially gathered data, extraction of a 3D representation and preprocessing to concentrate on the non-changing regions of the face;

FIG. 39 shows results obtained using the embodiment of FIG. 37A;

FIGs. 40 and 41 are a single flow chart illustrating a procedure for incorporating texture information into the matching process of the embodiment of FIG. 1; and

FIG. 42 is a simplified diagram illustrating isolation and subsequent mapping onto the canonical form of the texture data according to the embodiment of FIGs. 40 and 41.

DESCRIPTION OF THE PREFERRED EMBODIMENTS

The present embodiments show a face recognition approach based on 3D geometric or topographical information. Given a 3D facial surface, a geometric bending-invariant canonical form can be obtained by sampling the surface, computing the geodesic distances between points on it (using the Fast Marching method) and applying Multidimensional scaling (MDS). MDS allows representation of the surface in a low-dimensional Euclidean space, the bending invariant canonical form, and the canonical form is a representation which can be used for classification in general and matching in particular.

In one embodiment a triangulated manifold of the facial surface is formed from which the geodesic distances are computed. In another embodiment the geodesic distances are obtained from surface gradient data without forming the manifold.

Facial recognition using 3D geometry may be used on its own or to augment conventional 2D imaging. In one embodiment, 2D or texture data is processed together with 3D range or geometry data and matching is then carried out based on a weighted Euclidean distance using both the texture and the range data. As the 3D geometry is independent of viewpoint and lighting conditions, accurate face classification can be achieved.

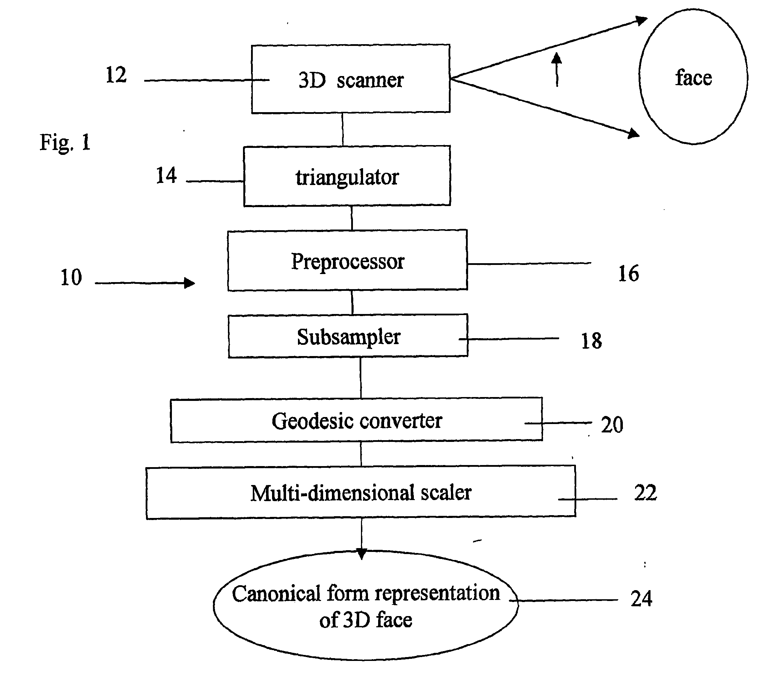

Referring now to the drawings, Figure 1 is a simplified diagram showing apparatus for obtaining 3-Dimensional data of a geometric body for classification, including matching, according to a first preferred embodiment of the present invention. The preferred embodiments relate specifically to matching of faces but the skilled person will be aware that the principles of the present invention are applicable to any geometric body having a three-dimensional structure.

Apparatus 10 comprises a three dimensional scanner 12 for obtaining three-dimensional topographical data of the body. Several types of scanner are described hereinbelow together with brief discussions of how to process data therefrom in some of the cases.

Data from the three-dimensional scanner 12 is passed to a triangulator 14. The triangulator may perform triangulation on the data received from the scanner in order to generate a three-dimensional triangulated manifold to represent the topological features of the body. The exact operation of the triangulator to derive the manifold may vary depending on the way in which the 3D information is gathered. In certain cases the manifold may be formed directly from the gathered data without the need for any intervening processing stage. The manifold preferably represents all of the three-dimensional topology of the body and therefore is in theory sufficient for allowing matching. However, in practice, direct comparisons using the triangulated manifold have a number of disadvantages, as will be demonstrated in experiment 3 hereinbelow. They require a large amount of calculation. Matching does not distinguish reliably between different faces. Moreover matching generally fails when the same face has a different expression and matching is unreliable even when the same face is posed at a different angle.

Embodiments of the present invention therefore preferably include four additional processing stages, the first of which is a preprocessor 16. Preprocessor 16 takes a reference point in order to determine an orientation around the manifold. The reference point can be any point on the face provided it is relatively easy to find automatically from a manifold of a face. A suitable reference point as used in the preferred embodiments is the tip of the nose. Other possible reference points include centers of eyeballs and the center of the mouth. Once the preprocessor has found the tip of the nose it is able to orientate itself with respect to the rest of the face and then parts of the face whose geometry is particularly susceptible to expressions, hereinafter referred to as soft regions, can be ignored. Parts of the face that are invariant with change of expression and the like, hereinafter hard regions, can be retained or even emphasized. As will be explained in greater detail below, the definition of soft regions is not fixed. For some methods and in some circumstances soft regions to be excluded may include all of the lower region of the face around the mouth. In other cases less drastic exclusions may be considered. In one embodiment, described in greater detail below, soft regions are removed using a geodesic mask. The mask may be applied separately to a texture map of the face and a depth map of the face.

Following the preprocessor is a subsampler 18. The subsampler 18 takes the preprocessed manifold and removes points so as to produce a less well defined manifold, but one which still defines the essential geometry of the face it is desired to match. In preferred embodiments, the user is able to select the number of points to trade off between accurate matching - a large number of points - and faster processing - a smaller number of points. As will be discussed in greater detail below, a preferred embodiment of the sub-sampler uses the Voronoi subsampling technique which begins at an initial point or vertex on the manifold and then adds the point or vertex having the greatest distance therefrom. The procedure is repeated iteratively until the selected number of points are included. Preferably the technique uses geodesic distances, which may be obtained using the fast marching method for the triangulated domain (FMM-TD), as described below.

Following the subsampler is a geodesic converter 20. The geodesic converter 20 receives the list of points of the subsampled manifold and calculates a vector for each pair of points. The vectors are expressed as geodesic distances, and the fast marching algorithm for the triangulated domain is again used to obtain the geodesic distances in an efficient manner as possible.

Following the geodesic converter is a multi-dimensional scaler 22, which takes the matrix of the geodesic distances calculated by the geodesic converter 20, referred to below as the distance matrix, and forms a low dimensional Euclidean representation of the series of geodesic distances, using multi-dimensional scaling. Multi-dimensional scaling is discussed in detail below. The low dimensional Euclidean representation provides a bending invariant representation of the geometric body, as will be explained in the discussion on multi-dimensional scaling below. The use of such a bending invariant representation ensures that the matching process is not fooled by, for example, scans of the head at different angles.

The output 24 of the multi-dimensional scalar is a representation of the 3D face in terms of Euclidean distances between surface points, referred to hereinbelow as the canonical form representation.

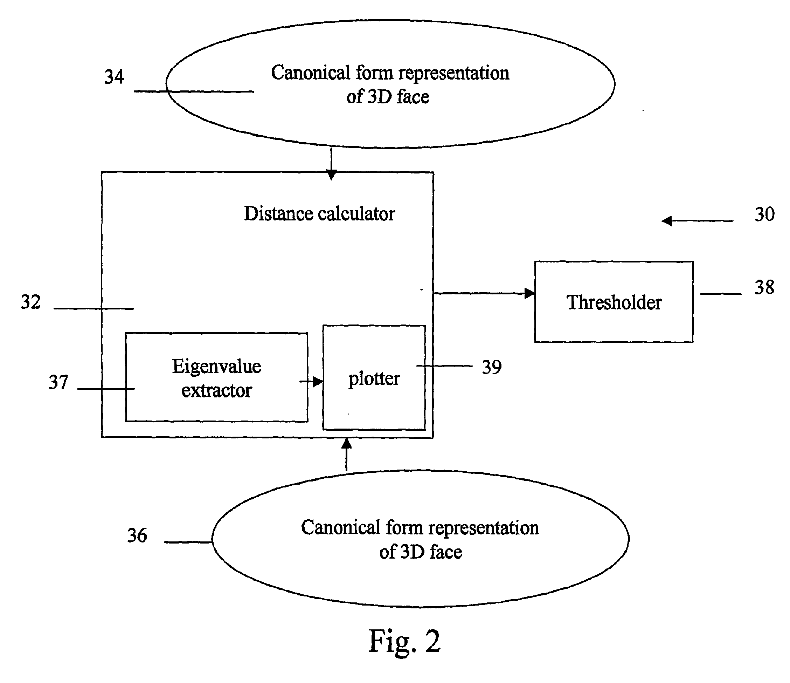

Reference is now made to Fig. 2, which is a simplified diagram showing a matching apparatus for matching two faces using the canonical form output as described above. The matcher 30 may be a continuation of the apparatus 10 or may be supplied as a separate unit. The matcher 30 comprises a distance calculator 32, which takes as input two canonical form representations 34 and 36, and calculates a distance therebetween. The distance calculation may use any suitable method for comparison of the canonical forms for each of the faces to be matched. A straightforward approach is to measure a distance between two sets of points, using, for example, the Hausdorff metric. However, the Hausdorf metric based method is computationally extensive.

An alternative approach, used in the present embodiments, takes the first $m$ eigenvalues obtained from the MDS procedure to provide coordinates in a low-dimensional feature space. Although the dominant eigenvalues do not describe the canonical form entirely, it is reasonable that similar faces have similar eigenvalues (and thus form clusters in the feature space). A distance is calculated between the geometric bodies, or, as will be described below, plotted on a graph of the feature space and a thresholder 38, which is connected subsequently to the distance calculator, thresholds the calculated distance to determine the presence or absence of a cluster in the feature space, the cluster indicating a match. In the embodiments described in detail herein, the first three Eigenvalues are taken and are plotted in a three dimensional feature space.

Reference is now made to Fig. 3, which shows a series of three two-dimensional images. It will be apparent to any human observer that the three images are of the same face, however conventional automatic matching techniques generally find very large distances between the three images and consequently fail to match them. Thus two-dimensional facial matching is prone to errors introduced by simple variables such as lighting direction. In fact, areas of the face that have high reflectivity, such as the eyes, can change substantially for very minor changes in lighting.

Returning now to Fig. 1, and as mentioned above, apparatus 10 preferably comprises a three-dimensional scanner 12. The face recognition described in the present embodiments treats faces as three-dimensional surfaces. It is therefore first of all necessary to obtain the facial surface of the subject that it is desired to recognize. Below is a short overview of currently available range finding techniques that are able to scan a face and generate three-dimensional data.

**Leaser range camera (Zcam)**

Reference is now made to Figs. 4a and 4b, which are simplified diagrams showing successive stages of operation of a laser range camera using depth encoding illumination. Currently, the fastest and most accurate, but at the same time most expensive, range cameras are those that are based on depth-encoding illumination.

Depth-encoded illumination is based upon the generation of a wall of light 40 which moves along the field of view. As the light hits the objects 42 in the scene, it is reflected back towards the camera 44. Due to the finite speed of the light, the reflection carries an imprint of the object depth which may be decoded using the appropriate electronics. The illumination is typically generated using IR laser diodes.

A 3D acquisition equipment of this type is known from WO Patent 01/18563, March 15, 2001, the contents of which are hereby incorporated by reference. Such a technology allows real-time data acquisition at about 30fps frame rate. Depth resolution can be greatly improved by averaging frames in time. Typical prices range between US$2K - 50K.

3D scanner

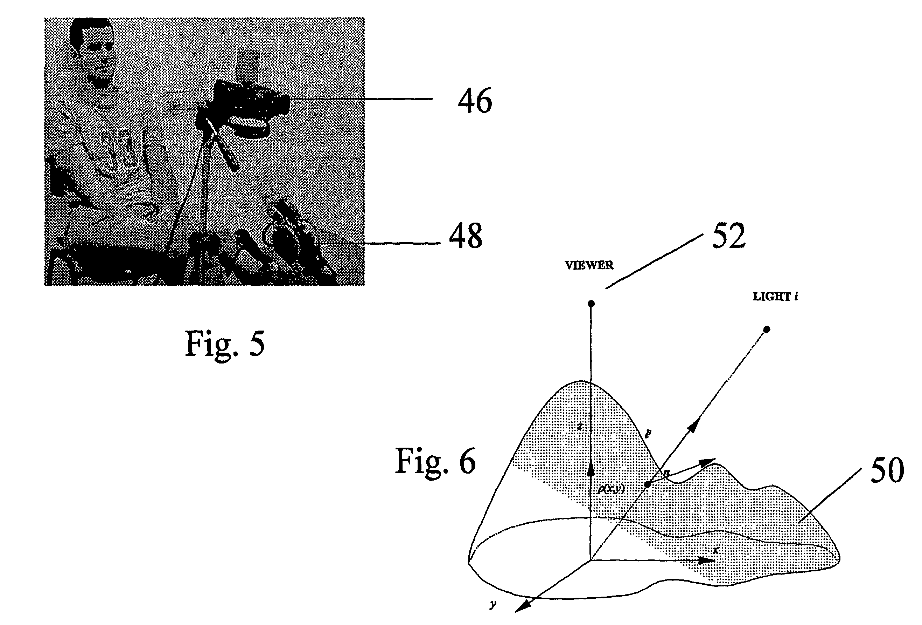

A slower and cheaper version of a 3D scanner is based upon J.-Y. Bouguet and P. Perona, "3D photography on your desk", in Proc. of the Int. Conf. on Computer Vision, Bombay, India, Jan. 1998. The scanner is based on a lamp and a pencil casting a line of shadow on a desk, and an implementation by Zigelman and Kimmel uses a narrow laser beam instead of shadow, see G. Zigelman and R. Kimmel, "Fast 3D laser scanner", Dept. of Computer Science, Technion - Israel Institute of Technology, Tech. Rep. CIS-2000-07, 2000. A typical device is shown in Fig. 5 and comprises a video camera 46 and moving laser projector 48. Using the device of Fig. 5, depth reconstruction is performed by analyzing the laser beam deformation as it illuminates the object. A related approach is discussed below under the heading "structured light".

Such a scanner can be constructed from cheap materials having a cost of between US$ 50-200. Typical scan speeds for faces achievable with such devices are within the range 15-30 sec, and the low scan speed limits the approach to laboratory and like controlled conditions.

**Structured light**

The idea of structured light relates to the projecting of a known pattern (e.g. parallel stripes) on to an object, and subsequently capturing depth information from the pattern deformation. Further details are available from C. Rocchini, P. Cignoni, C. Montani, P. Pingi and R. Scopigno, A low cost 3D scanner based on structured light, EUROGRAPHICS 2001, A. Chalmers and T.-M. Rhyne (Guest Editors), Volume 20 (2001), Number 3, the contents of which are hereby incorporated by reference.

Typical data acquisition setup includes a CCD camera and a projector and is relatively inexpensive with current costs being in the region of US$1K - 5K. Such a data acquisition device was used by Beumier and Acheroy for 3D face recognition, and reference is made to C. Beumier and M. P. Acheroy, Automatic Face Identification, Applications of Digital Image Processing XVIII, SPIE, vol. 2564, pp. 311-323, July 1995, and to C. Beumier and M. P. Acheroy, Automatic Face Authentication from 3D Surface, British Machine Vision Conference BMVC 98, University of Southampton UK, 14-17 Sep, 1998, pp 449-458, 1998, the contents of which are hereby incorporated by reference.

The disadvantage of the structured light method is the need for controlled illumination conditions, again rendering the method inapplicable to many real life applications.

**Photometric stereo**

An alternative way of facial surface acquisition, which does not require any dedicated hardware, is surface reconstruction from photometric stereo. Photometric stereo requires the acquiring of several images of the same subject in different illumination conditions and extracting the 3D geometry from the images by assuming a Lambertian reflection model. A surface is said to exhibit Lambertian reflection if it behaves as a dull or matte surface. That is to say, for incident light from any direction, the reflection is entirely diffuse, meaning that light is reflected in equal intensity in all directions. For any given surface, the brightness depends only on the angle between the illumination source and the surface normal.

Reference is now made to Fig. 6, which is a simplified diagram showing a facial surface 50, represented as a function, viewed from a given position 52 on the z-axis. The object is illuminated by a source of parallel rays 54 directed along *l'*.

In the following, Lambertian reflection is assumed and the observed picture is thus given by

$$I^l(x,y) = \rho(x,y)\langle n(x,y), l^l \rangle, \qquad (1)$$

where *p(x,y)* is the object albedo or reflective power, and *n(x,y)* is the normal to the object surface, expressed as

$$n(x,y) = \frac{\left[-z_x(x,y), -z_y(x,y), 1\right]}{\sqrt{1 + \|\nabla z(x,y)\|_2^2}}. \qquad (2)$$

Using matrix-vector notation, equation (1) can be rewritten as

$$I(x,y) = L\nu \qquad (3)$$

where

$$L = -\begin{bmatrix} l_1^1 & l_2^1 & l_3^1 \\ \vdots & \vdots & \vdots \\ l_1^N & l_2^N & l_3^N \end{bmatrix} \; ; \; I(x,y) = \begin{bmatrix} I^1(x,y) \\ \vdots \\ I^N(x,y) \end{bmatrix} \qquad (4)$$

and

$$\nu_1 = z_x \nu_3 \; ; \; \nu_2 = z_y \nu_3 \; ; \; \nu_3 = \frac{\rho(x,y)}{\sqrt{1 + \|\nabla z\|_2^2}}. \qquad (5)$$

Given at least 3 linearly independent illuminations $\{l^i\}_{i=1}^N$, and the corresponding observations $\{I^i\}_{i=1}^N$, one can reconstruct the values of $\nabla z$ by pointwise least-squares solution

$$\nu = L^\dagger I(x,y) \qquad (6)$$

where $L^+ = (L^T L)^{-1} L^T$ denotes the Moore-Penrose pseudoinverse. It is noted that the Moore-Penrose pseudoinverse is a substitute for the inverse matrix, and is useful in circumstances in which a standard inverse matrix does not exist. A function for obtaining the Moore-Penrose pseudoinverse of a matrix is provided for example as a standard feature in Matlab.

Having the gradient $\nabla z$, the surface 50 can be reconstructed by minimization of the following function:

$$\tilde{z} = \arg\min_{\tilde{z}} \iint \left[ (\tilde{z}_x - z_x)^2 + (\tilde{z}_y - z_y)^2 \right] dx dy \qquad (7)$$

The Euler-Lagrange conditions of equation (7), in turn, allow rewriting of the Poisson equation thus,

$$\tilde{z}_{xx} + \tilde{z}_{yy} = z_{xx} + z_{yy} \qquad (8)$$

[1] the solution of which yields a reconstructed surface $\tilde{z}$. See R. Kimmel, *Numerical geometry of images*, Lecture notes.

One of the obvious problems in the surface reconstruction from photometric stereo approach arises from deviations from the Lambertian model in real faces. In face recognition applications, some face features (such as eyes, hair, beard etc.) have a strongly non-Lambertian nature.

To reduce the irregularities in the reconstructed surface, one can add a penalty term on surface non-smoothness to the least-squares solution, for example to give a total variation:

$$\bar{z} = \arg\min_{\bar{z}} \iint \left[ \left( \bar{z}_x - z_x \right)^2 + \left( \bar{z}_y - z_y \right)^2 \right] dxdy + \lambda \iint \| \nabla z \|_2 \, dxdy \quad (8a)$$

Geometric Face Recognition Scheme

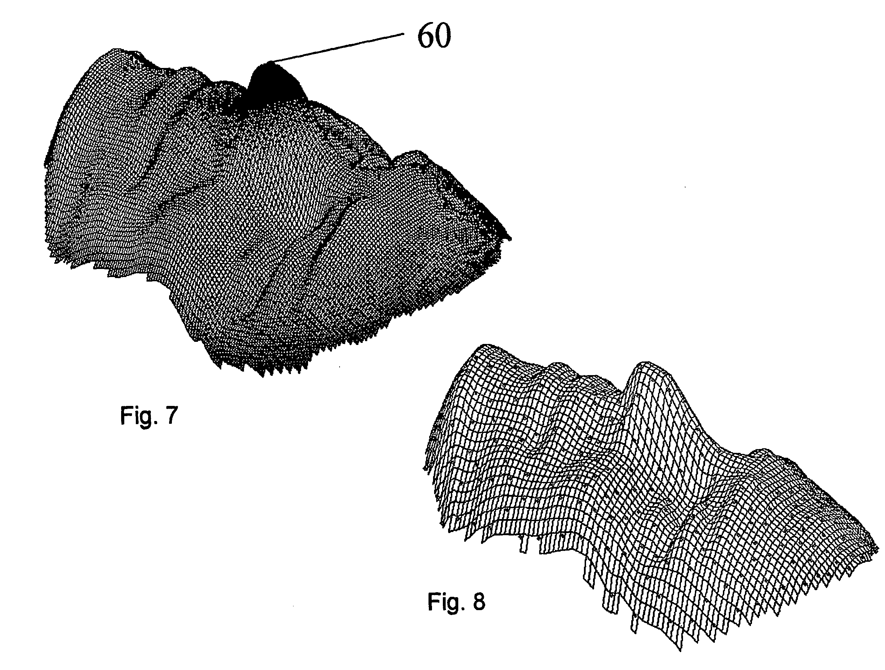

The face recognition scheme of the present embodiments is based on the geometric features of the three-dimensional facial surface. The geometric features may be obtained either directly from a 3D scan and incorporated as points or vertices into a triangulated manifold of the kind shown in Fig. 7, or the vertices may be derived from photometric stereo and then arranged to form the triangulated manifold.

Preliminary processing, such as centering and cropping, is preferably performed on the manifold prior to recognition. Centering and cropping actions can be carried out by simple pattern matching, which may use the eyes, or the tip of the nose 60, as the most recognizable feature of the human face. The facial contour may also be extracted in order to limit processing to the surface belonging to the face itself, thus to exclude foreground items such as spectacles and the like. Such tasks are preferably performed by the preprocessor 16 referred to above.

Preprocessing preferably emphasizes those sections of the face less susceptible to alteration, the so-called hard regions, including the upper outlines of the eye sockets, the areas surrounding one's cheekbones, and the sides of the mouth. On the other hand, sections, which can be easily changed (e.g. hair), the soft regions, are preferably excluded from the recognition process. As will be discussed below, regions that change significantly according to expression can also be included as soft regions and excluded, and in certain embodiments processing may be limited just to the upper part of the face.

Following treatment by the preprocessor, the manifold typically still comprises too many points for efficient processing and more points than are really necessary to convey the underlying facial geometry. Hence subsampling is carried out using subsampler 18 in order to form the subsampled manifold of Fig. 8.

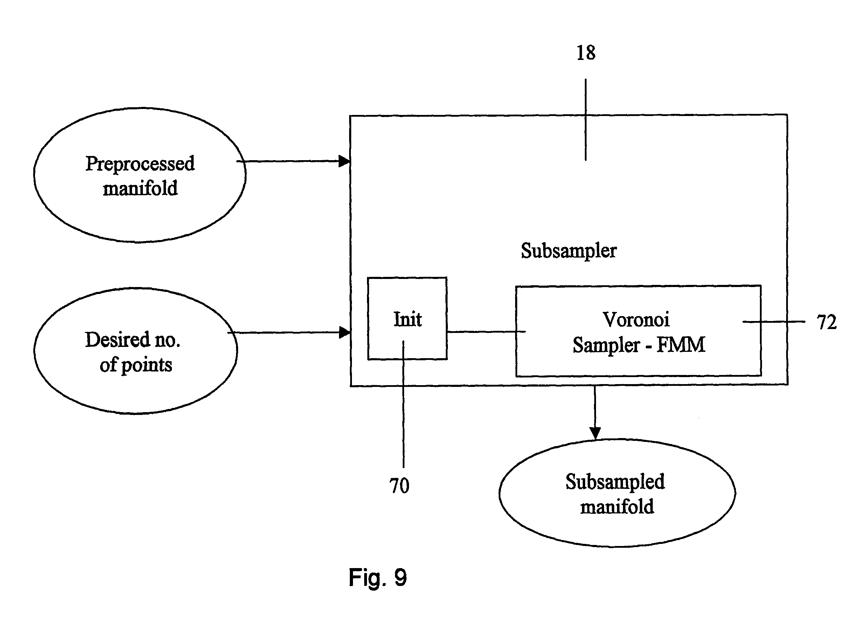

Reference is now made to Fig. 9, which is a simplified block diagram showing the subsampler 18 in greater detail. The subsampler comprises an initializer 70, and a Voronoi sampler 72, and takes as inputs the preprocessed full manifold and a desired number of points, or any other user-friendly way of defining a trade-off between accuracy and computational efficiency.

In the subsampling procedure, a subset of $n$ uniformly distributed vertices is selected from the triangulated surface within the facial contour. The sub-sampling is performed using the iterative Voronoi sampling procedure, where on each iteration a vertex with the largest geodesic distance from the already selected ones is selected. The procedure is initialized by a constant vertex selected by the initializer and the geodesic distances needed are preferably computed using FMM-TD, the mathematics of which are discussed in greater detail below. For further information on Voronoi sampling, reference is made to CISM Journal ACSGC Vol. 45 No. 1. Spring 1991 pp 65-80, Problems with handling spatial data, the Voronoi approach, Christopher M. Gold. FMM-TD is discussed in greater detail below.

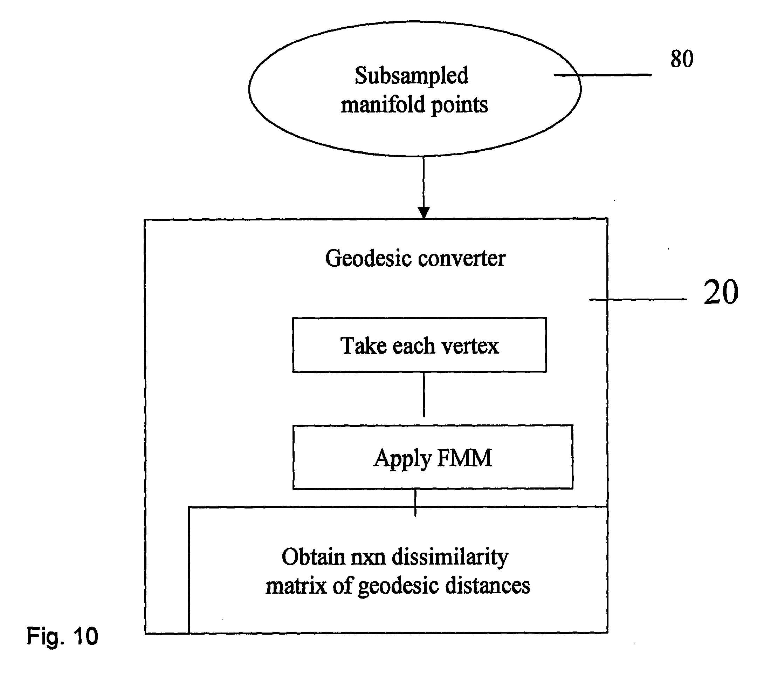

Reference is now made to Fig. 10, which is a simplified block diagram showing in greater detail the geodesic converter 20 of Fig. 1. In the geodesic converter 20, sets of points 80 are received from the subsampler 18. An $n \times n$ distance matrix of geodesic distances is then created by applying FMM-TD from each of the $n$ selected vertices to each other vertex. One of the principles ensuring the low computational complexity of FMM-TD is the fact that already calculated distances from the Voronoi sampling can be reused in subsequent computations such as computing the geodesic distance matrix.

Using the n x n distance matrix, multi-dimensional scaling (MDS) is applied to produce a dissimilarity matrix, a map of similarities or dissimilarities that provides a canonical representation of the face in a low-dimensional Euclidean space. Since isometric transformations do not affect the geodesic distances, it may be expected that a face undergoing such a transformation yields the same canonical form as that of the original face. Studies carried out by the inventors show that indeed slight non-isometric transformations produce small but insignificant deviations from the original canonical form. MDS is discussed in greater detail below.

The last stage of the facial matching operation consists of matching or classification, i.e. comparison of the canonical forms. A straightforward approach is to measure a distance between two sets of points, using, for example, the Hausdorff metric. However, the Hausdorf metric based method is computationally extensive and should be therefore avoided.

An alternative approach, used in the present embodiments, takes the first $m$ eigenvalues obtained from the MDS procedure to provide coordinates in a low-dimensional feature space. Although the dominant eigenvalues do not describe the canonical form entirely, it is reasonable that similar faces have similar eigenvalues (and thus form clusters in the feature space). Experiments, cited below, show that the described comparison is sufficiently accurate and has low computational complexity. In the present embodiments the first three eigenvalues are taken and plotted onto a three-dimensional feature space.

Fast Marching on Triangulated Manifolds

Face recognition according to the present embodiments uses geodesic distances between points on the facial surface, both for subsampling and for creating a distance matrix from the subsampled points. Initially, one computes distances between pairs of points on a triangulated manifold representing the facial surface, and then an efficient numerical method is required to obtain geodesic distances therefrom.

A method known as The Fast Marching Method (FMM), is disclosed by J. A. Sethian, A fast marching level set method for monotonically advancing fronts, Proc. Nat. Acad. Sci., 93, 4, 1996. The fast marching method was subsequently extended to triangulated domains (FMM-TD) as disclosed in R. Kimmel and J. A. Sethian, Computing geodesic paths on manifolds. FMM-TD is an efficient numerical method to compute a first-order approximation of the geodesic distances.

Given a set of source points $\{s_i\}$ on a manifold such as that of Fig. 7, the distance map $T(x,y)$ from these points to other points on the manifold is obtained as the solution of the Eikonal equation

$$\|\nabla T\| = 1 \quad ; \quad T(s_i) = 0. \qquad (9)$$

FMM-TD allows computing of the distance map with $O(N\log N)$ complexity, where $N$ is the number of points on the manifold.

When the face geometry is obtained from photometric stereo additional efficiency can be achieved as follows. There is no actual need to compute the surface itself from equation (8) above. It is sufficient to find the gradient $\nabla z$, and use its values to construct the metric used by the FMM.

Multidimensional Scaling

Multidimensional scaling (MDS) is a method that maps measured similarities or dissimilarities among a set of objects into a representation of the pattern of proximities in a low-dimensional Euclidean space, and in this context, reference is made to G. Zigelman, R. Kimmel, and N. Kiryati, Texture mapping using surface flattening via multi-dimensional scaling, Accepted to IEEE Trans. on Visualization and Computer Graphics, 2001, and R. Grossmann, N. Kiryati, and R. Kimmel. Computational surface flattening: A voxel-based approach. Accepted to IEEE Trans. on PAMI, 2001.

Given a set of $n$ objects, their mutual similarities $\left\{d_{ij}\right\}_{i,j=1}^{n}$ and the desired dimensionality $m$, MDS finds a set of vectors in $m$-dimensional space (each vector corresponding to an object) such that the matrix of Euclidean distances among them corresponds as closely as possible to a function of the input matrix D according to a certain criterion function.

In the present embodiments, proximity values are obtained by measuring the geodesic distances between points on the facial surface using the FMM-TD method. A. Elad and R. Kimmel, Bending invariant representations for surfaces, Proc. of CVPR'01 Hawaii, Dec. 2001, showed that applying MDS to geodesic distances on a manifold produces a bending-invariant canonical form.

There exists a variety of different algorithms for solving the MDS problem; in each of them a tradeoff between computational complexity and algorithm accuracy is made. The present embodiments make use of the classical scaling algorithm introduced by Young et al. however the skilled person will appreciate the applicability of other methods.

Classical scaling finds the coordinates $x_i$ of $n$ points in a $k$-dimensional Euclidean space, given their mutual distances $\left\{d_{ij}\right\}_{i,j=1}^{n}$. The Euclidean distance between the points $i$ and $j$ is expressed by

$$d_{ij}^2 = \|x_i - x_j\|_2^2 = (x_i - x_j)^{\mathrm{T}}(x_i - x_j). \qquad (10)$$

Given the squared-distance matrix D with elements as in (10) one can construct the inner-product matrix

$$B=-\tfrac{1}{2}\left(I-\tfrac{1}{n}11^T\right)D\left(I-\tfrac{1}{n}11^T\right)=XX^T \qquad (11)$$

where $1=[1,...,1]^T$ and $X = [x_1,...,x_n]^T$. B is a positive semi-definite matrix with at most $k$ positive eigenvalues, which can be expressed as

$$B = U\Lambda U^T . \qquad (12)$$

The coordinate matrix X is therefore obtained by computing the square root matrix of B

$$X = U\Lambda^{\frac{1}{2}} . \qquad (13)$$

It is noted that, from a statistical point of view, the above-described approach is equivalent to principal component analysis (PCA), which finds an orthogonal basis that maximizes the variance of the given $n$ vectors projected to the basis vectors.

Empirical observations show that three dimensions usually suffice for representation of most of the geometric structure contained in the geodesic distances measured on a smooth surface.

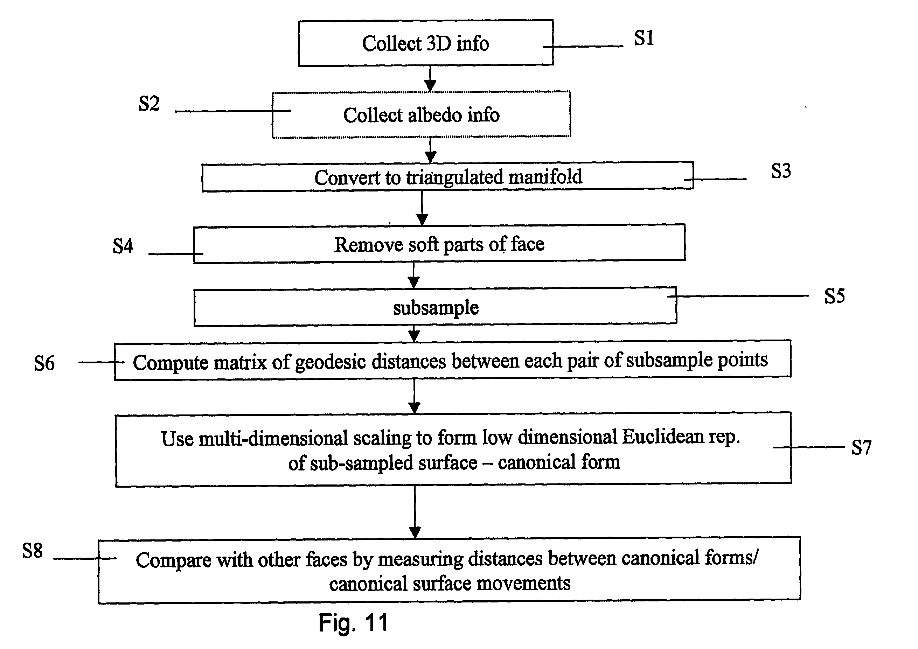

Reference is now made to Fig. 11, which is a simplified flow chart showing the process flow of embodiments of the present invention, and showing how the various procedures and functions described above may work together. In a first stage S1, 3D data is collated from the object it is desired to match. Collation may use any of the scanning methods described above or any other suitable method of gathering 3D topological information of a body. In an optional stage S2, albedo or reflectivity power information may be gathered. One of the possibilities of incorporating albedo information is by embedding the two-dimensional face manifold into a 4D or 6D space and measuring distances on the manifold using a combined metric, thus the 4th coordinate in the 4D-embedding and the 4th-6th coordinates in the 6D-embedding represent the gray level or the RGB channels of the albedo information, respectively.

The data gathered is then presented in a stage S3 as a series of points on a triangulated manifold such as that of Fig. 6. The manifold may be constructed directly from the 3D data or may require auxiliary calculations, depending on the data gathering method used.

Stage S4 is a preprocessing stage. The preprocessing stage removes soft - that is often changing regions of the face geometry and retains hard regions, that is those regions that remain constant. Preprocessing may also include cropping the image and like operations. Preprocessing preferably involves locating a reference point on the face and then using the general facial form to determine the locations of the soft regions that are to be ignored.

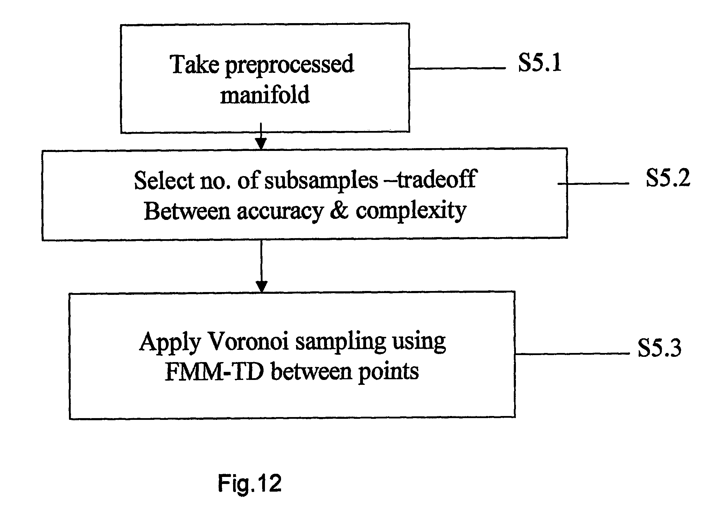

Stage S5 is a subsampling stage. The preprocessed manifold is reduced by selecting only those points which are most crucial for retaining geometric information. As discussed above, efficient techniques such as Voronoi sampling may be used. Stage S5 is shown in greater detail in Fig. 12 in which a stage S5.1 comprises input of the preprocessed manifold. A selection stage S5.2 allows a user to set a desired number of points for the subsampling in a tradeoff between accuracy and computational complexity. Finally a stage 5.3 involves Voronoi sampling, which looks for the minimum number of points having the maximum topological information. As discussed above, an initial point is taken and then a farthest point therefrom is added until the desired number of points is reached. Geodesic distances are used to determine furthest points and FMM - TD can be used to find the geodesic distances.

In a stage S6, a distance matrix is computed of geodesic distances between each subsampled vertex and each other point. As explained above, FMM-TD is preferably used as an efficient method of computing geodesic distances.

In a stage S7, MDS is used to measure dissimilarity in the distance matrix and thereby express the geodesic distances in a low dimensional Euclidean representation. Finally in a stage S8, the face as represented in low dimensional Euclidean representation can be compared with other faces by various distance calculation techniques. As discussed above, a preferred method uses the first $m$ eigenvalues obtained from the MDS procedure to provide coordinates in a low-dimensional feature space. In the present embodiments the first three eigenvalues are taken and plotted on a three-dimensional feature space. Although the dominant eigenvalues do not describe the canonical form entirely, similar faces nevertheless form recognizable clusters in the feature space and thus allow matching.

Experimental Results

Four experiments were performed in order to evaluate the approach and validate the present embodiments. Three databases were used:

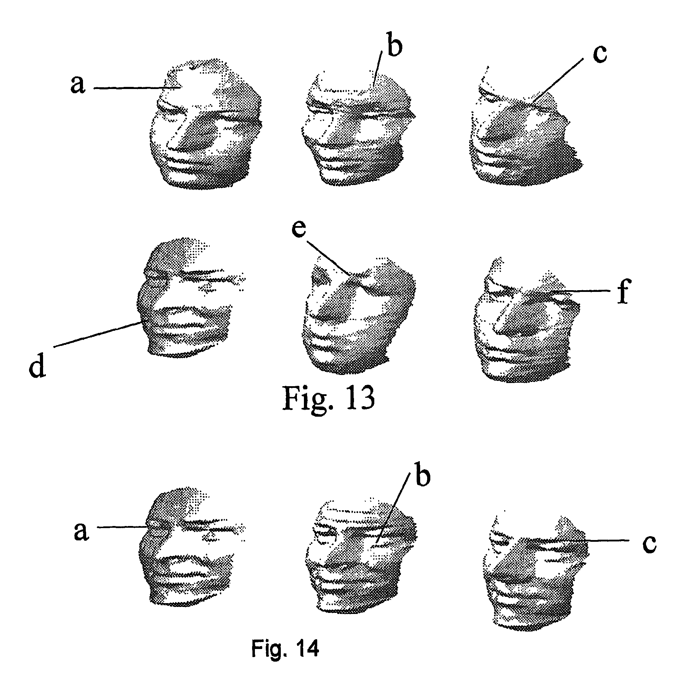

I. A database [1] of 3D facial surfaces obtained by a simple 3D scanner of the kind described above and shown in Fig. 13. The database consisted of 6 subjects a..f including one artificial face (subject b) and 5 human faces.

[1]The database is available from http://www.cs.technion.ac.il/~zgil, courtesy of Gil Zigelman.

II. The Yale Face Database B [2]. The database consists of high-resolution grayscale images of 10 subjects of both Caucasian and Asian type, taken in controlled illumination conditions. Each subject was depicted in several poses (slight head rotations). 3D surface reconstruction was carried out using photometric stereo.

[2]The database is available from http://cvc.yale.edu/projects/yalefacesB/ yalefacesB.html

III. A Database of high-resolution facial surfaces and textures of human subjects with different facial expressions, obtained using the 3D scanner.

**Scanned surfaces with artificial facial expressions**

The first experiment was performed on database I (Fig 13) and was intended to test algorithm sensitivity to artificial facial expressions.

Reference is now made to Fig. 14 which shows how one of the faces of Fig. 13 was deformed to simulate facial expressions. Face a is undeformed face d of Fig. 13, and faces b and c are different deformations applied thereto. In b, the forehead, cheek and chins of subject d were deformed, simulating different facial expressions of the same subject. In c, a feature, the nose, was substituted with that of a different face. The latter was applied to test algorithm sensitivity to major feature alteration It is emphasized that these deformations were not isometric.

The surfaces were scaled to the size 60×95 and downsampled to 400 points using Voronoi sampling. Afterwards, the geodesic distance from each point was computed using FMM-TD and multidimensional scaling was applied to the distance matrix.

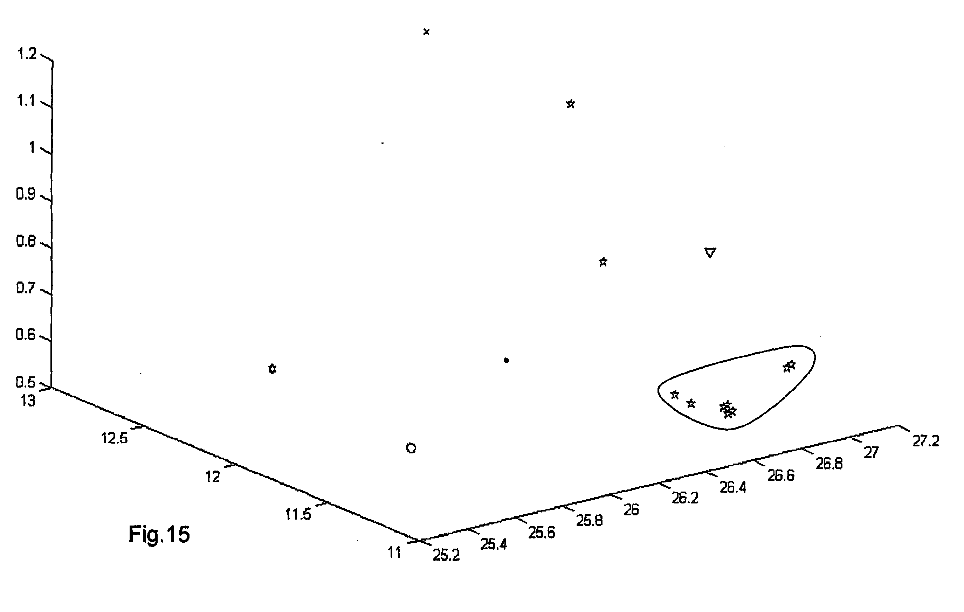

Reference is now made to Fig. 15, which is a graph of a 3-dimensional feature space for matching. More specifically, the graph of Fig. 15 depicts the feature-space representation on which the first 3 eigenvalues obtained by MDS may be plotted. Each point in the feature space corresponds to one of the faces in Figs 13 and 14, viz A (dot), B (circle), C (cross), D (pentagram), E (triangle) and F (hexagram). It can be seen that face deformations, though not purely isometric, produce closely located points that form clusters. On the other hand, faces obtained by feature substitution are far from the original face of subject D.

**Photometric stereo**

The second experiment was performed on database II. The aims of the experiment were to determine the feasibility of using photometric stereo for 3D surface acquisition and the sensitivity of the algorithm to head rotations.

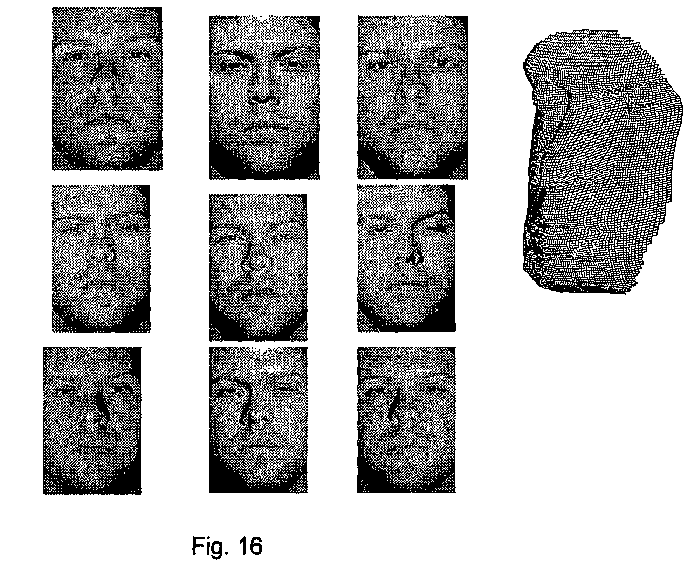

It appears that faithful surface reconstruction from photometric stereo demands a large number of different illumination directions. The reason is primarily due to deviations in practice from the Lambertian model (especially notable in forehead, hair and eyes) and slight subject displacement during image acquisition (e.g. eye blinking). Reference is now made to Fig. 16, which shows nine different illuminations of the same face and a least squares surface reconstruction made by surface reconstruction from all nine of the images. Nine is simply a number found empirically to be an efficient number. Smaller numbers of images resulted in less accurate surfaces and therefore less accurate recognition.

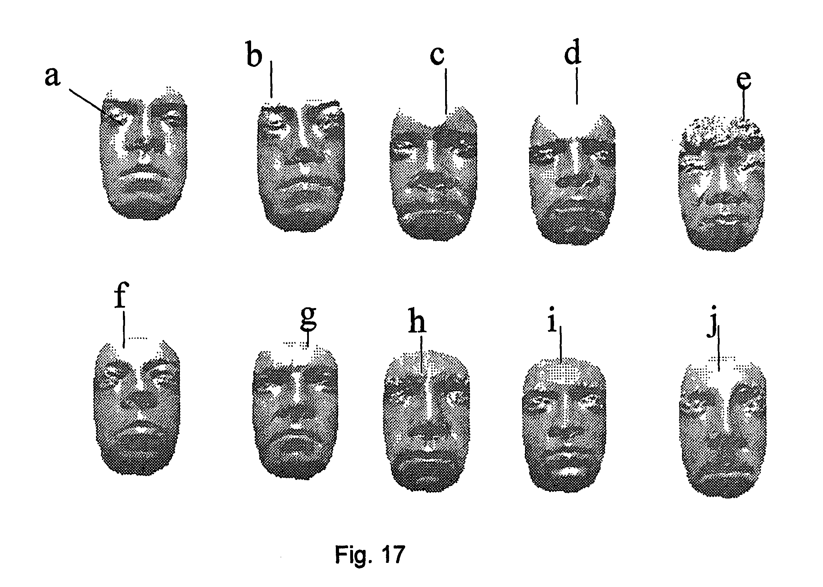

Reference is now made to Fig. 17, which depicts a series of ten facial surfaces a-j each reconstructed from photometric stereo from nine images of respective faces. It is noted that relatively high noise appears to be inevitable when reconstructing 3D geometry from photometric stereo.

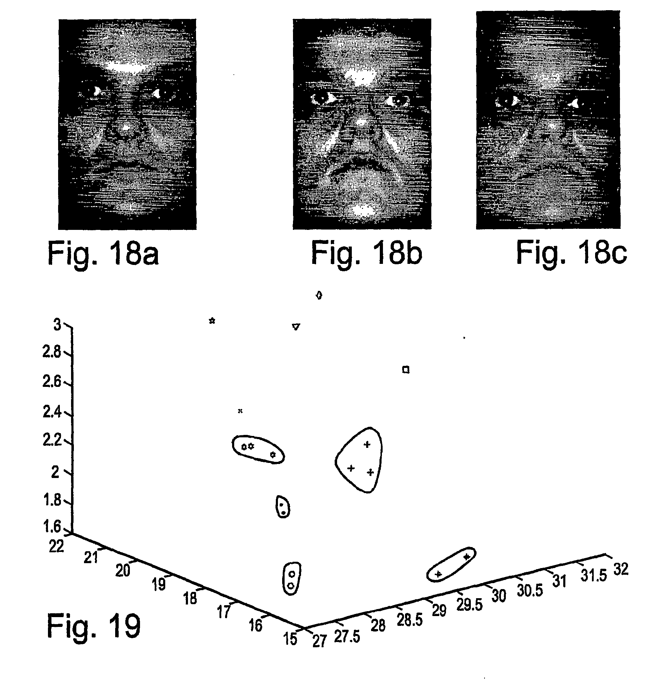

Reference is now made to Fig. 18, which shows subject G of fig. 17 taken at several poses. For some subjects, several poses were taken to test the recognition sensitivity to small head rotations. Since the algorithm is bending invariant, the influence of rotation (an isometric transformation) should be negligible, and all the possible deviations found seem mainly to be due to inaccurate surface reconstruction.

In the experiment, faces were manually centered according to the eye and lip locations and processing was performed in the region bounded by the facial contour. The surfaces were scaled to the size 56×80 and sampled at 400 points using Voronoi sampling. Afterwards, the distance from each point was computed using fast marching, and multidimensional scaling was applied to the distance matrix.

Reference is now made to Fig. 19, which is a simplified graph depicting the feature-space representation using the first 3 eigenvalues obtained by singular value decomposition of the faces of Fig. 17, some of them in several poses as exemplified by Fig. 18. A (dot), B (circle), C (cross), D (plus), E (star), F (pentagram), G (hexagram), H (diamond), I (square) and J (triangle). Different poses of subjects A, B, D, E and G form clusters. It is clear from the results of the second experiment that different poses result in relatively narrow clusters.

**Surface matching**

The third experiment was performed on database I, the aim of the experiment being to compare the geometric approach to a straightforward surface comparison.

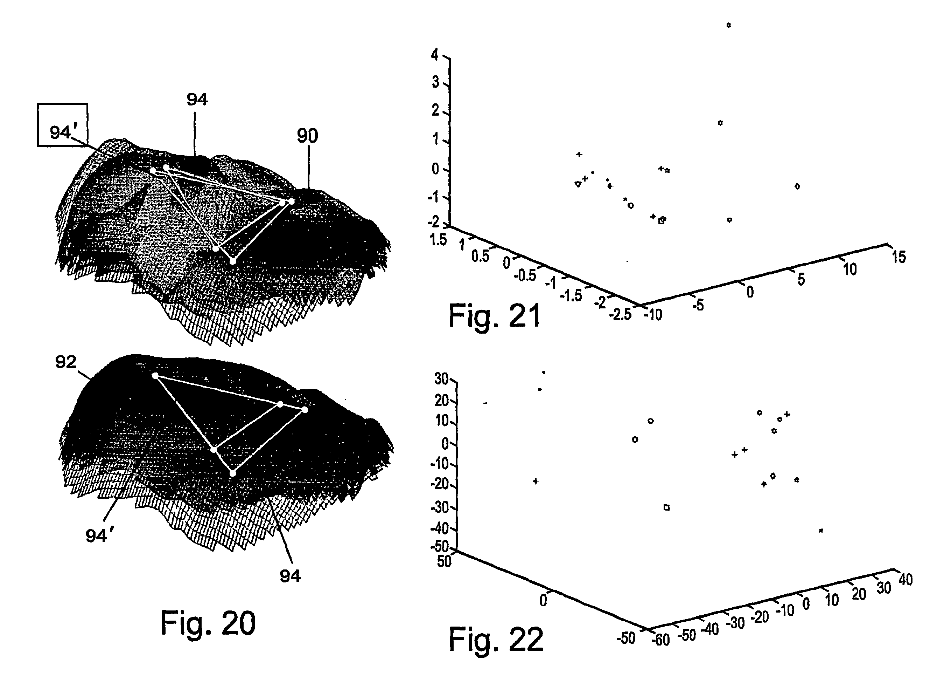

The experiment uses a simple $L_2$-norm-based measure for surface similarity. Reference is now made to Fig. 20, which shows two pairs of surfaces 90 and 92. Each surface has a plane 94, 94' defined by the two eyeball centers and the center of the mouth. Pair of surfaces 90 are not aligned and pair of surfaces 92 are the same as those in 90 but after alignment. In the experiment, the surfaces were aligned in two different ways:

(a) as shown in Figure 20, so that the planes 94, 94' formed by the two eyeball centers and the center of the mouth in the two surfaces coincided, and
(b) by finding the Euclidean transformation

$$Rx + b \qquad (14)$$

in which $R$ is a rotation matrix, and $b$ is a translation vector, so as to minimize the sum of Euclidean distances between the points on the two surfaces, that is the rotation is selected that minimizes the surface dissimilarity (in this case, the approximated volume in the gap between two aligned surfaces). Optimal alignment was found by the gradient descent algorithm with numeric gradient computation.

Once an optimal alignment is found, the proximity of surfaces is computed by integrating the volume of the gap between the two surfaces. Such an approach follows the global surface matching idea disclosed in C. Beumier and M. P. Acheroy, Automatic Face Authentication from 3D Surface, British Machine Vision Conference BMVC 98, University of Southampton UK, 14-17 Sep, 1998, pp 449-458.", 1998.

For visualization purposes and for displaying the subjects as points in 3D space, a matrix D is formed of the distances between the surfaces according to

$$d_{ij} = \sum_{k=1}^{N} \left\| x_k^i - x_k^j \right\|_2 \qquad (15)$$

where $\left\{ x_k^i \right\}_{k=1}^{N}$ are the N points forming the *i*-th surface, and applying MDS to D. The first three dominant eigenvalues were taken in order to obtain the representation of the proximity pattern in a three-dimensional Euclidean space.

Reference is now made to Figs 21 and 22, which are two graphs summing up the results of this third experiment. It is apparent that the straightforward comparison of manifolds after alignment is sensitive to facial expressions and fails to distinguish between different expressions of the same subject on the one hand and different subjects on the other hand.

More particularly, Figs. 21 and 22 show that unlike the geodesic distances, $L_2$ distances between the surfaces do not distinguish between faces, even using an optimal surface alignment. Different expressions and head poses of the same subject do not form recognizable clusters. The reason is the fact that the straightforward comparison does not take into consideration the geometry of the facial surfaces.

Fig. 21 shows the results of an $L_2$-based algorithm for alignment according to 3 points for the set of faces of Fig. 17 and some of the faces showing different expressions: A (dot), B (circle), C (cross), D (plus), E (star), F (pentagram), G (hexagram), H (diamond), I (square) and J (triangle). No clusters are recognizable.

Fig. 22 uses an $L_2$-based algorithm with optimal alignment for the same set of faces: A (dot), B (circle), C (cross), D (plus), E (star), F (pentagram), G (hexagram), H (diamond), I (square) and J (triangle). Again, no distinct clusters appear.

**Human subjects with real expressions**

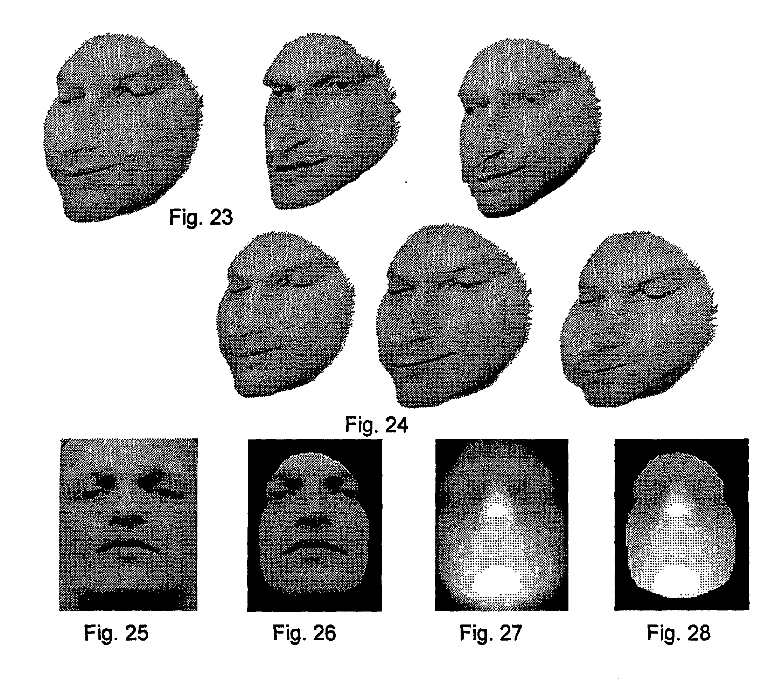

A fourth experiment was performed, this time using database III. The main goal was testing the algorithm in field conditions, on subjects with real facial expressions. Three subjects from database III are shown in Fig. 23, and Fig. 24 shows a single subject with three different expressions.

Reference is now made to Figs 25 - 28 which show preprocessing of the faces to extract only features that are relevant. The faces were processed in order to extract the relevant features only. A geodesic mask was applied both to the texture and the depth maps. The mask was obtained by computing a ball of constant radius -in the geodesic sense-around the tip of the nose. In the experiment the nose location was found manually. Figs. 25 and 26 are texture maps, and Figs 27 and 28 are depth maps. Figs. 25 and 27 show texture and depth maps respectively before application of the mask and Figs. 26 and 28 show texture and depth maps respectively after application of the mask.

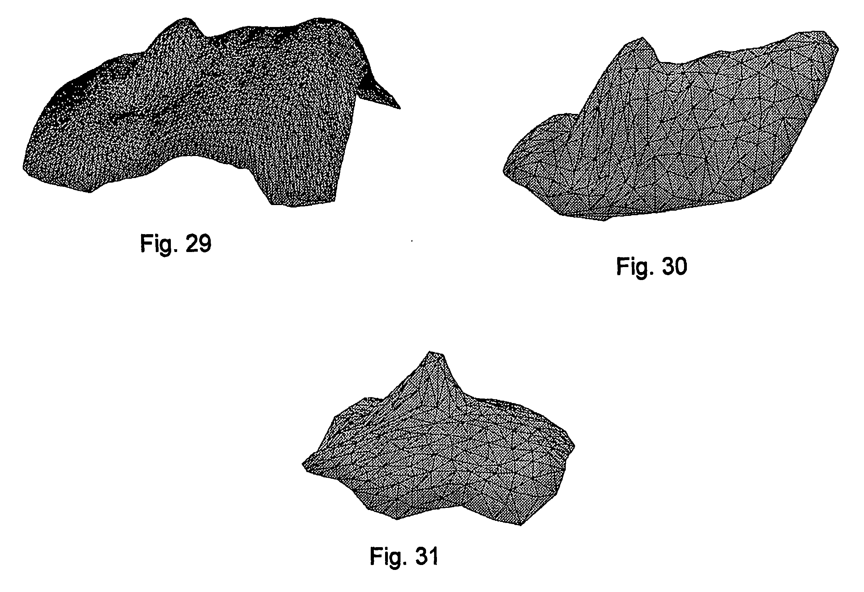

Reference is now made to Figs. 29, 30 and 31, which respectively show mesh processing stages of the present embodiments. Fig. 29 shows the high-resolution triangulated manifold, Fig. 30 shows the downsampled version of the manifold and Fig. 31 shows the surface in canonical form.

The minimal mean squared distance measure yielded much better results applied to the canonical surface rather than to the original manifold. Currently, the minimal mean squared distance measure appears to be computationally expensive. Canonical form comparison, based on central moments which are much simpler to compute, yielded a bit less accurate results than the minimal squared distance, but still provided a good measure for face similarity.

The classical scaling algorithm was used for creating the canonical forms. The present inventors have seen no significant improvement over the classical scaling algorithm in using the least-square MDS algorithm. 250-500 subsamples have been found to give sufficient accuracy while keeping the computational complexity relatively low.

It is noted that the present embodiments yield poor results when considering strong non-isometric deformations of the facial surface such as inflated cheeks or open mouth. Limiting the region of interest to the upper part of the face, being a hard region and containing substantially rigid features, on the preprocessing stage yields significantly better results under the above conditions.

Geodesic Distance Calculations Using a Metric Tensor.

The above-described embodiment describes a 3D face recognition approach based on geometric invariant signatures. The key idea of the embodiment is a representation of the facial surface, invariant to isometric deformations, such as those resulting from facial expressions. One of the stages in the construction of the geometric invariants is the measurement of geodesic distances on triangulated surfaces, which, as described above, is carried out by fast marching on triangulated domains (FMTD). The embodiment to be described below uses only the metric tensor of the surface for geodesic distance computation. When combined with photometric stereo for facial surface acquisition, the embodiment permits construction of a bending-invariant representation of the face without reconstructing the 3D the surface.

In the present embodiment, a variation is provided of the above-described fast marching on triangulated domains (FMTD). As mentioned in the previous paragraph, the variation is capable of computing geodesic distances given only the metric tensor of the surface, and does not require an actual 3D reconstruction of the facial surface, thus making the method simpler and less prone to errors. The embodiment is preferably combined with the photometric stereo method for facial surface acquisition. Photometric stereo is a cheap and simple approach, producing the metric tensor without reconstructing the surface. As a result, a simple and fast face recognition method is obtained.

Surface Acquisition

The face recognition algorithm of the present embodiment treats faces as three-dimensional surfaces. It is therefore necessary to obtain first the facial surface of the subject that we are trying to recognize. The present embodiment focuses on methods that reproduce the surface gradient. As will be shown hereinbelow, the actual surface reconstruction is not needed, saving computational effort and reducing numerical errors.

A. Photometric stereo

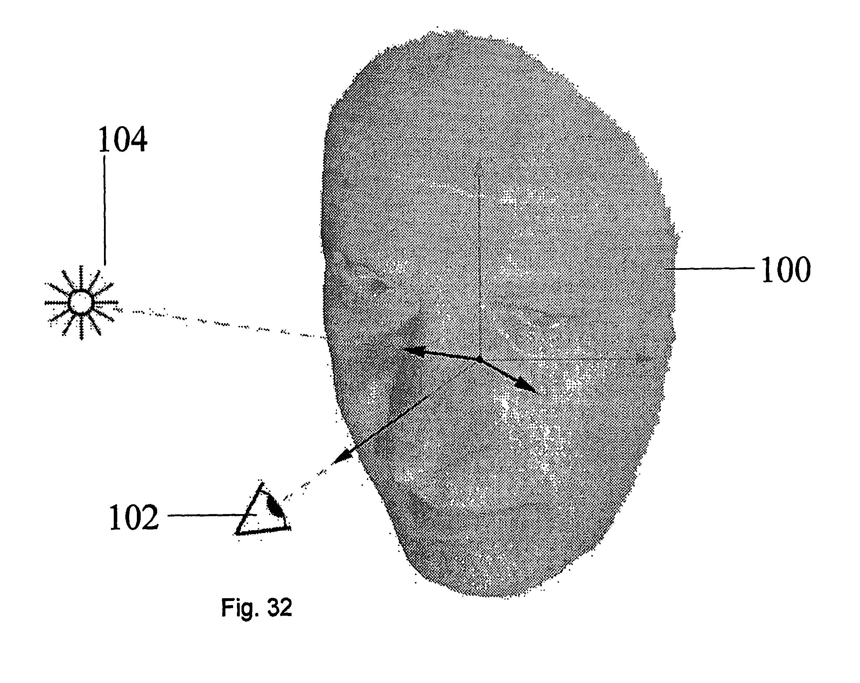

Reference is now made to Fig. 32, which shows a face 100, a viewing position 102 and a lighting source 104. The photometric stereo technique consists of obtaining several pictures of the same subject in different illumination conditions and extracting the 3D geometry by assuming the Lambertian reflection model. We assume that the facial surface, represented as a function, is viewed from given viewing position 102 along the z-axis. The object is illuminated by a source of parallel rays directed along $_jl$ from 104.

In the following, the equation numbering is started again from 1.

We assume a Lambertian reflection model, i.e. the observed image is given by

$$I^l\left(x,y\right) = \rho\left(x,y\right)n\left(x,y\right)\cdot l^l \qquad (1)$$

where $\rho(x,y)$ is the object albedo, and $n(x,y)$ is the normal to the object surface, expressed as

$$n(x,y) = \frac{\left(-z_x(x,y), -z_y(x,y), 1\right)}{\sqrt{1+\left\|\nabla z(x,y)\right\|_2^2}} \quad (2)$$

Using matrix-vector notation, (1) can be rewritten as

$$I(x,y) = Lv \quad (3)$$

where

$$L = \begin{pmatrix} l_1^1 & l_2^1 & l_3^1 \\ \vdots & \vdots & \vdots \\ l_1^N & l_2^N & l_3^N \end{pmatrix} \;;\; I(x,y) = \begin{pmatrix} I^1(x,y) \\ \vdots \\ I^N(x,y) \end{pmatrix} \quad (4)$$

and

$$v_1 = -z_x v_3 \;;\; v_2 = -z_y v_3 \;;\; v_3 = \frac{\rho(x,y)}{\sqrt{1+\left\|\nabla z\right\|_2^2}} \cdot \quad (5)$$

Given at least 3 linearly independent illuminations $\left\{l^i\right\}_{i=1}^N$, and

the corresponding observations $\left\{I^i\right\}_{i=1}^N$, and $v = L^\dagger I(x,y)$ one can reconstruct the values of $\nabla z$ by pointwise least-squares solution where $L^\dagger = (L^T L)^{-1} L^T$ denotes the Moore-Penrose pseudoinverse. When needed, the surface can be reconstructed by solving the Poisson equation

$$\tilde{z}_{xx} + \tilde{z}_{yy} = z_{xx} + z_{yy}$$

with respect to $\nabla z$. In the present embodiment we adopt the photometric stereo approach due to its simplicity, however it will be appreciated that the invention is in no way so limited.

B. Structured light

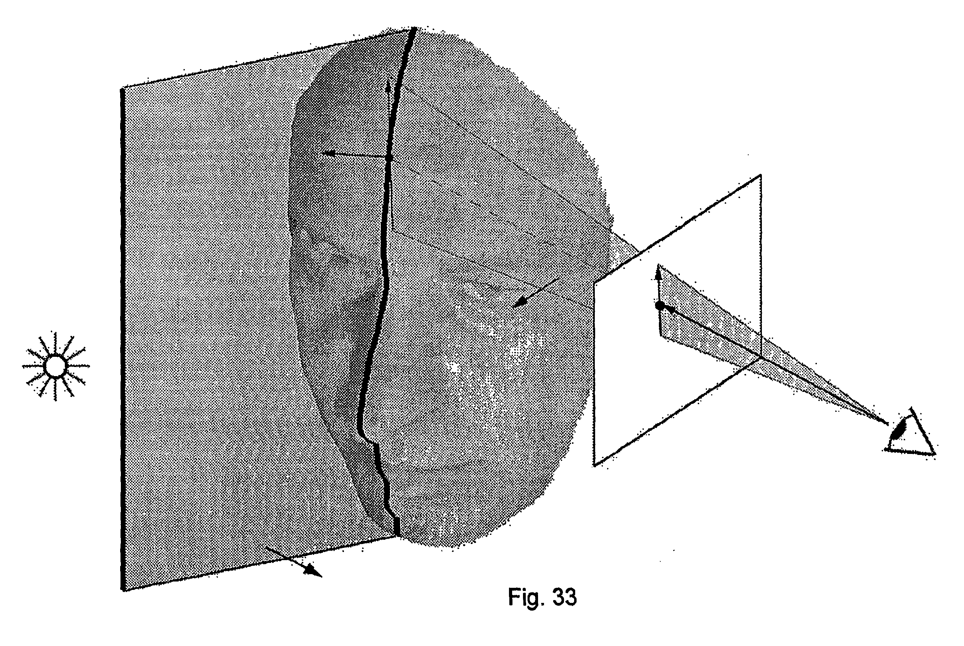

M. Proesmans, L. Van Gool and A. Oosterlinck, One-Shot Active Shape Acquisition, Proc. Internat. Conf. Pattern Recognition, Vienna, Vol. C, pp. 336- 340, 1996; and S. Winkelbach and F. M. Wahl, Shape from 2D Edge Gradients, Pattern Recognition, Lecture Notes in Computer Sciences 2191, pp. 377-384, Springer, 2001, proposed a shape from 2D edge gradients reconstruction technique, which permits a reconstruction of the surface normals (gradients) from two stripe patterns projected onto the object. The reconstruction technique is based on the fact that directions of the projected stripes in the captured 2D images depend on the local orientation of the surface in 3D. Classical edge-detecting operators, such as Sobel, Canny, etc can be used to find the direction of the stripe edges.
Reference is now made to Fig. 33 which is a simplified diagram illustrating the relationship between surface gradient and local stripe direction. A pixel in the image plane defines a viewing vector $s$. The stripe direction determines the stripe direction vector $v'$, lying in both the image plane and in the viewing plane. The real tangential vector of projected stripe $v_1$ is perpendicular to the normal $v = s' \times c$ of the viewing plane and to the normal $p$ of the stripe projection plane. Assuming parallel projection, we obtain

$$v_1 = c \times p \quad (8)$$

Acquiring a second image of the scene with a second stripe illumination rotated relative to the first image, allows a second tangential vector $v_2$ to be calculated. Next, the surface normal is computed according to

$$n = v_1 \times v_2 . \quad (9)$$

In S. Winkelbach and F. M. Wahl, Shape from Single Stripe Pattern Illumination, L. Van Gool (Ed): Pattern Recognition (DAGM 2002), Lecture Notes in Computer Science 2449, pp. 240-247, Springer, 2002, the authors use a single lighting pattern to estimate the surface normal from the local directions and *widths* of the projected stripes.

Bending-Invariant Representation

Classical surface matching methods, based on finding an Euclidean transformation of two surfaces which maximizes some shape similarity criterion, are suitable mainly for rigid objects. Use of such methods is detailed in O. D. Faugeras and M. Hebert, A 3D recognition and positioning algorithm using geometrical matching between primitive surfaces, Proc. 7th Int'l Joint Conf. on Artificial Intelligence, pp. 996-1002, 1983; further in P. J. Besl, The free form matching problem. Machine vision for threedimensional scene, Freeman, H. (ed.) New York Academic, 1990, and also in G. Barequet and M. Sharir, Recovering the position and orientation of free-form objects from image contours using 3D distance map, IEEE Trans. PAMI, 19(9), pp. 929-948, 1997.

As clear from the present disclosure, the human face can by no means be considered as a rigid object since it undergoes deformations resulting from facial expressions. On the other hand, the class of transformations that a facial surface can undergo is not arbitrary, and empirical observations show that facial expressions can be modeled as *isometric* (or length preserving) transformations. Such transformations do not stretch and nor do they tear the surface. More rigorously, it is possible to say that the transformations that the human face undergoes preserve the surface metric. The surfaces resulting from such transformations are called *isometric surfaces*. The requirement of a deformable surface matching algorithm is to find a representation, which is the same for all isometric surfaces.

E. L. Schwartz, A. Shaw and E. Wolfson, A numerical solution to the generalized mapmaker's problem: flattening non-convex polyhedral surfaces, IEEE Trans. PAMI, 11, pp. 1005-1008, 1989, were the first to introduce the use of multidimensional scaling (MDS) as a tool for studying curved surfaces by planar models. G. Zigelman, R. Kimmel and N. Kiryati, Texture mapping using surface flattening via multi-dimensional scaling, IEEE Trans. Visualization and Comp. Graphics, 8, pp. 198-207, 2002; and R. Grossman, N. Kiryati and R. Kimmel, Computational surface flattening: a voxel-based approach, IEEE Trans. PAMI, 24, pp. 433-441, 2002 extended some of these ideas to the problem of texture mapping and voxel-based cortex flattening.

A generalization of this approach was introduced in A. Elad, R. Kimmel, Bending invariant representations for surfaces, Proc. CVPR, pp. 168-174, 2001, as a framework for object recognition. They showed an efficient algorithm for constructing a representation of surfaces, invariant under isometric transformations. The method, described therein as bending-invariant canonical forms, is utilized as a convenient representation in the present embodiment.

Given a polyhedral approximation of the facial surface, S. one can think of such an approximation as having been obtained by sampling the underlying continuous surface on a finite set of points $p_i(i = 1,...,n)$, and discretizing the metric $\delta$ associated with the surface

$$\delta\left(p_i, p_j\right) = \delta_{ij} . \quad (10)$$

Writing the values of $\delta_{ij}$ in matrix form, we obtain a matrix of mutual distances between the surface points. For convenience, we define the *squared* mutual distances,

$$(\Delta)_{ij} = \delta_{ij}^2 . \quad (11)$$

The matrix $\Delta$ is invariant under isometric surface deformations, but is not a unique representation of isometric surfaces, since it depends on arbitrary ordering and the selection of the surface points. We would like to obtain a geometric invariant, which would be unique for isometric surfaces on one hand, and which, on the other hand allows use of simple rigid surface matching algorithms to compare such invariants. Treating the squared mutual distances as a particular case of *dissimilarities*, one can apply the dimensionality reduction technique, mentioned in respect of the previous embodiments and called *multidimensional scaling* (MDS), in order to embed the surface into a low-dimensional Euclidean space $\mathbf{R}_m$. This is equivalent to finding a mapping between two metric spaces,

$$\varphi : (S, \delta) \rightarrow (\mathbf{R}^m, d) \quad ; \quad \varphi(p_i) = x_i, \qquad (12)$$

that minimizes the embedding error,

$$\varepsilon = f\left(\left|\delta_{ij} - d_{ij}\right|\right) \quad ; \quad d_{ij} = \left\|x_i - x_j\right\|_2, \qquad (13)$$

for some monotonous function *f*.

The obtained *m*-dimensional representation is a set of points $x_i \in \mathbf{R}_m$ (*i* = 1,...,*n*), corresponding to the surface points $p_i$.

Different MDS methods can be derived using different embedding error criteria, thus I. Borg and P. Groenen, Modem multidimensional scaling - theory and applications, Springer, 1997. A particular case is *classical scaling*, introduced by G. Young and G. S. Householder, Discussion of a set of points in terms of their mutual distances, Psychometrika 3, pp. 19-22, 1938. The embedding in $\mathbf{R}_m$ is performed by double-centering the matrix

$$\mathbf{B} = -\tfrac{1}{2} \mathbf{J} \Delta \mathbf{J} \qquad (14)$$

where J = I-$_{1\ n}$U; I is a $n \times n$ identity matrix, and U is a matrix consisting entirely of ones. The first *m* eigenvectors $e_i$, corresponding to the *m* largest eigenvalues of B, are used as the embedding coordinates

$$x_i^j = e_i^j \quad ; \quad i=1,...,n; \; j=1,...,m, \qquad (15)$$

*where* $\mathbf{x}_i^j$ denotes the *j*-th coordinate of the vector $x_i$. We refer to the set of points $x_i$ obtained by the MDS as the *bending invariant canonical form* of the surface. When *m*=3, the set of points can be plotted as a surface. Standard rigid surface matching methods can be used in order to compare between two deformable surfaces, using their bending-invariant representations instead of the surfaces themselves. Since the canonical form is computed up to a translation, rotation, and reflection transformation, to allow comparison between canonical forms, they must be *aligned*. This can be done, for instance, by setting the first-order moments, typically centers of mass, and the mixed second-order moments to zero, as described in A. Tal, M. Elad and S. Ar, Content based retrieval of VRML objects - an iterative and interactive approach", EG Multimedia, 97, pp. 97-108, 2001.

Measuring Geodesic Distances

One of the crucial steps in the construction of the canonical form of a given surface, is an efficient algorithm for the computation of geodesic distances on surfaces, that is, $\delta_{ij}$. A numerically consistent algorithm for distance computation on triangulated domains, henceforth referred to as *fast marching on triangulated domains* (FMTD), was used by Elad and Kimmel and has been discussed hereinabove in respect of the previous embodiments. FMTD was proposed by Kimmel and Sethian as a generalization of the *fast marching method*.

Using FMTD, the geodesic distances between a surface vertex and the rest of the *n* surface vertices can be computed in O(*n*) operations. Measuring distances on manifolds has been carried out before for graphs of functions and implicit manifolds, as discussed in J. Sethian and A. Vladimirsky, Ordered upwind methods for static Hamilton-Jacobi equations: theory and applications. Technical Report PAM 792 (UCB), Center for Pure and Applied Mathematics, 2001 Submitted for publication to SIAM Journal on Numerical Analysis, July 2001; and also F. M'moli and G. Sapiro, Fast computation of weighted distance functions and geodesics on implicit hyper-surfaces. Journal of Computational Physics, 173(2), pp. 730-764, 2001.

By contrast with the above citations however, the focus of the present embodiment is to avoid making a surface reconstruction. Thus, the present embodiment makes use of a modified version of FMTD, which computes the geodesic distances on a surface, using the values of the surface gradient Vz only. The surface gradient values can be obtained, for example, from photometric stereo or structured light.

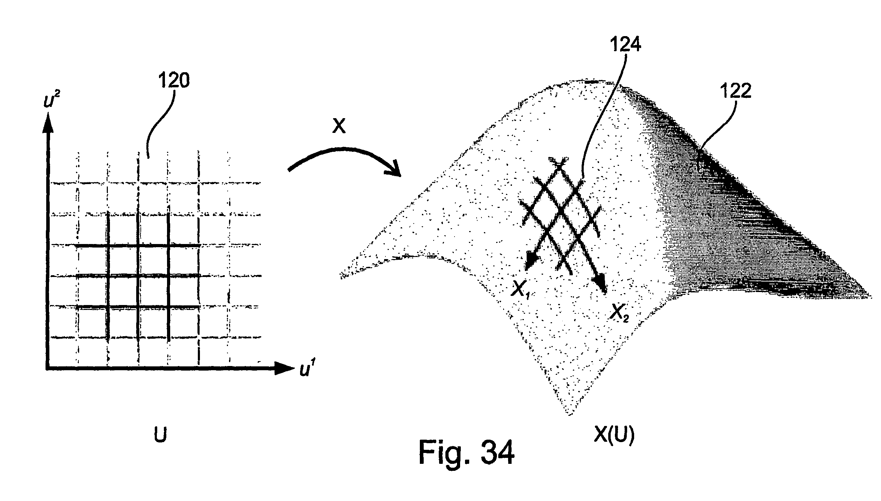

Reference is now made to Fig. 34, which is a simplified diagram illustrating an orthogonal grid U 120 projected via transform X onto a manifold 122 to form a non-orthogonal grid X(U) 124.

The facial surface can be thought of as a parametric manifold, represented by a mapping $_{23}$X: $\rightarrow$ **R R** from the parameterization plane U=$(u^1,u^2)$=$(x,y)$ to the parametric manifold

$$X(U) = \left( x^1\left(u^1,u^2\right), x^2\left(u^1,u^2\right), x^3\left(u^1,u^2\right) \right); \quad 16$$

which, in turn, can be written as

$$X(U) = \left( x, y, z(x,y) \right). \quad (17)$$

The derivatives of X with respect to $u_i$ are defined as

$$X_i = \frac{\partial}{\partial u^i} X$$

and they constitute non-orthogonal coordinate system 124 on the manifold as illustrated. In the particular case of equation (17) above,

$$X_1 = \left(1, 0, z_x\right), X_2 = \left(0, 1, z_y\right). \quad (18)$$

The distance element on the manifold is

$$ds = \sqrt{g_{ij} u^i u^j}, \quad (19)$$

where we use Einstein's summation convention, and the metric tensor $g_{ij}$ of the manifold is given by

$$\left(g_{ij}\right) = \begin{pmatrix} g_{11} & g_{12} \\ g_{21} & g_{22} \end{pmatrix} = \begin{pmatrix} X_1 \cdot X_1 & X_1 \cdot X_2 \\ X_2 \cdot X_1 & X_2 \cdot X_2 \end{pmatrix}. \quad (20)$$

The classical fast marching method, discussed in J. A. Sethian, A review of the theory, algorithms, and applications of level set method for propagating surfaces. Acta numerica, pp. 309-395, 1996, calculates distances in an orthogonal coordinate system. The numerical stencil for the update of a grid point consists of the vertices of a right angled triangle. In the present case, g12 $\neq$ 0 and the resulting triangles are not necessarily right angled. If a grid point is updated by a stencil which is an obtuse triangle, a problem may thus arise. The values of one of the points of the stencil might not be set in time and cannot be used. There is a similar problem with fast marching on triangulated domains which include obtuse triangles. The problem, and a possible solution, is discussed further in R. Kimmel, and J. A. Sethian, Computing geodesic on manifolds. Proc. US National Academy of Science 95, pp. 8431-8435, 1998.

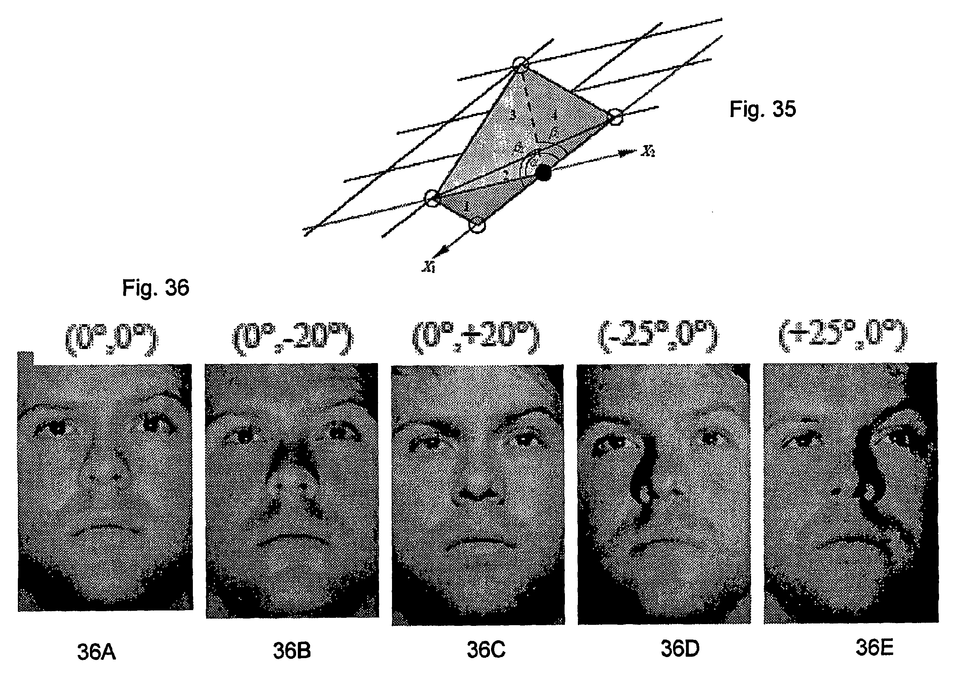

Our solution is similar to that of the above reference. In the present embodiment, we perform a preprocessing stage for the grid, in which we split every obtuse triangle into two acute ones, as illustrated in Fig. 35. Fig. 5 illustrates two original triangles labeled 1 and 2. Triangle 1 gives a proper numerical support, yet triangle 2 is obtuse. Thus triangle 2 is replaced by triangle 3 and triangle 4. The split is performed by adding an additional edge, connecting the updated grid point with a non-neighboring grid point. The distant grid point becomes part of the numerical stencil. The need for splitting is determined according to the angle between the non-orthogonal axes at the grid point. It is calculated by

$$\cos \alpha = \left( \frac{X_1 X_2}{\|X_1\|\|X_2\|} \right) = \frac{g_{12}}{\sqrt{g_{11}g_{22}}} \qquad 21$$

If $\cos \alpha = 0$, the axes are perpendicular, and no splitting is required. If $\cos \alpha < 0$, the angle $\alpha$ is obtuse and should be split. The denominator of (21) is always positive, so we need only check the sign of the numerator g12.

In order to split an angle, we connect the updated grid point with another point, located $m$ grid points from the point in the $X_1$ direction, and $n$ grid points in the $X_2$ direction. It is noted that $m$ and $n$ can be negative. The newly connected point is a proper supporting point if the obtuse angle is split into two acute ones. For $\cos \alpha < 0$ this is the case if

$$\cos \beta_1 = \left( \frac{X_1(mX_1 + nX_2)}{\|X_1\|\|mX_1 + nX_2\|} \right) =$$
$$= \frac{mg_{11} + ng_{12}}{\sqrt{g_{11}(m^2 g_{11} + 2mng_{12} + n^2 g_{22})}} > 0 \qquad (22)$$

and

$$\cos \beta_2 = \left( \frac{X_2(mX_1 + nX_2)}{\|X_2\|\|mX_1 + nX_2\|} \right) =$$
$$= \frac{mg_{12} + ng_{22}}{\sqrt{g_{22}(m^2 g_{11} + 2mng_{12} + n^2 g_{22})}} > 0. \qquad (23)$$

Also, it is enough to check the sign of the numerators. For $\cos \alpha > 0$, $\cos \beta_2$ changes its sign and the constraints are

$$mg_{11} + ng_{12} > 0, \quad mg_{12} + ng_{22} < 0. \qquad (24)$$

This process is done for all grid points. Once the preprocessing stage is done, we have a suitable numerical stencil for each grid point and we can calculate the distances.

The numerical scheme used is similar to that of Kimmel and Sethian as referenced above, with the exception that there is no need to perform the unfolding step. The supporting grid points that split the obtuse angles can be found more efficiently. The required triangle edge lengths and angles are calculated according to the surface metric $g_{ij}$ at the grid point, which, in turn, is computed using the surface gradients $z_x$, $z_y$. A more detailed description appears in A. Spira and R. Kimmel, An efficient solution to the eikonal equation on parametric manifolds, submitted for publication, 2003, the contents of which are hereby incorporated by reference.

3d Face Recognition

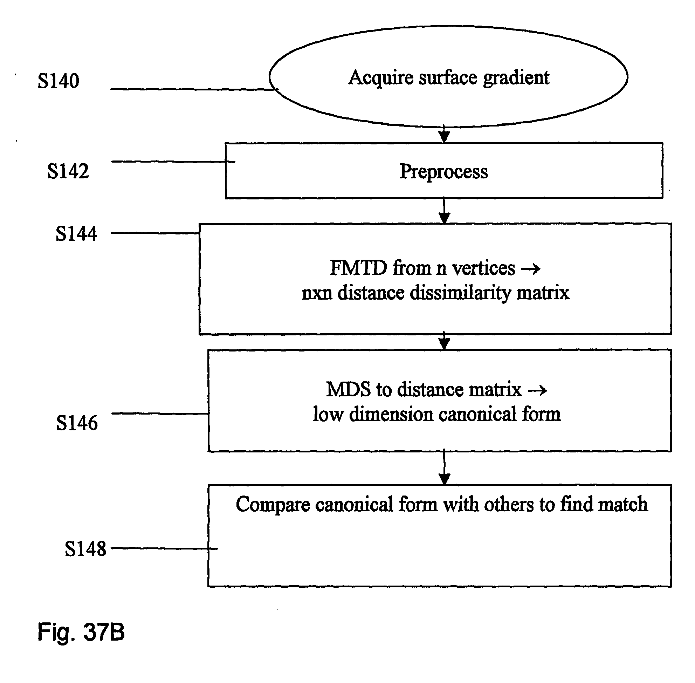

Reference is now made to Fig. 37B, which is a simplified block diagram illustrating apparatus for carrying out the present embodiment. A 3-D scanning system 126 carries out 3D data acquisition in order to obtain surface gradient data. A preprocessor 128 carries out preprocessing of the raw data. Preliminary processing, such as centering and cropping can be carried out by simple pattern matching, which can use the eyes as the most recognizable feature of the human face, as discussed with the previous embodiments.

The facial contour is preferably also be extracted in order to limit processing to the surface belonging to the face itself. That is to say, the initial scanning may include regions not belonging to the face itself.

As discussed in respect of the previous embodiments, preprocessing preferably emphasizes those sections of the face less susceptible to alteration and excludes the parts that can be easily changed, such as the hair. In experimental work using the present embodiment, the preprocessing stage was limited to cropping the triangulated manifold by removing the parts lying outside an ellipse (in the geodesic sense) centered at the nose tip.

FMTD unit 130 applies FMTD to distances from each of n selected vertices to points on the face to form an nxn dissimilarity distance matrix. MDS unit 132 then applies multi-dimensional scaling to the matrix to form a low dimensional canonical form of the surface, again as discussed with the previous embodiments. The canonical form is then used as an input to comparator 134 to compare with other faces represented as canonical forms in database 136.

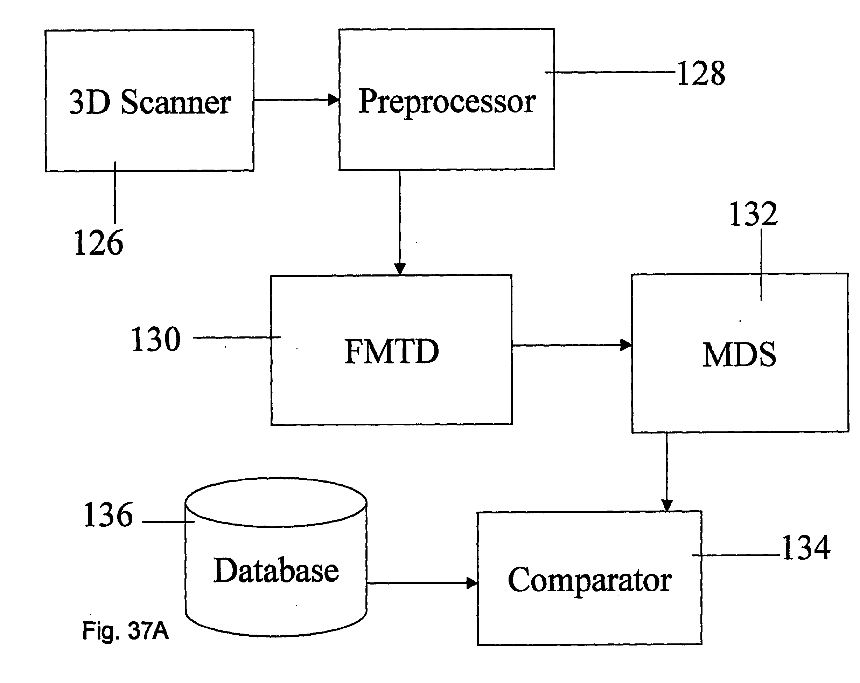

Reference is now made to Fig. 37B which is a simplified flow diagram illustrating the process of 3D Face recognition without facial reconstruction. As a first step S140, the 3D face recognition system according to the present embodiment acquires the surface gradient Vz, as discussed hereinabove. At stage S142, the raw data are preprocessed, as discussed in respect of Fig. 37A. Briefly, centering and cropping can be carried out by simple pattern matching, using the eyes as the most recognizable feature of the human face.

The facial contour may also be extracted in order to limit the processing to the surface belonging only to the face itself.

As discussed, preprocessing preferably emphasizes those sections of the face less susceptible to alteration and excludes the parts that can be easily changed, such as the hair. In experimental work using the present embodiment, the preprocessing stage was limited to cropping the triangulated manifold by removing the parts lying outside an ellipse (in the geodesic sense) centered at the nose tip.

Next, in stage S144 an $n \times n$ dissimilarity matrix of geodesic distances, hereinafter the distance matrix, is created by applying FMTD from each of the n selected vertices. Then, in stage S 146, MDS - multi-dimensional scaling - is applied to the distance matrix, producing a canonical form of the face in a low-dimensional Euclidean space. In the above referred to experimental work a three-dimensional space was used. The canonical form obtained in the above manner is then compared with a database of templates corresponding to other subjects in a one-to many type matching process, or to a single stored template in a one-to-one type match. If the correspondence of the compared canonical form falls within a certain statistical range of values, the match is considered to be valid.

Finding correspondence between the canonical forms brings us back to the surface-matching problem discussed in respect of the previous embodiments. An advantage of the present embodiments in general is the fact that matching is performed between the rigid canonical forms carrying the intrinsic object geometry, rather than the deformable facial surfaces themselves. Thus even the simplest rigid surface matching algorithms produce plausible results.

In the present embodiment, we adopted the moments system referred to above in reference to A Tal et al, due to its simplicity. The canonical form's (*p, q, r*)-th moment is given by

$$M_{pqr} = \sum_n \left(x_n^1\right)^p \left(x_n^2\right)^q \left(x_n^3\right)^r \quad (25)$$

where $x_n^i$ denotes the $i_{th}$ coordinate of the $n_{th}$ point in the canonical surface samples. In order to compare between two canonical forms, the vector $(M_{p_1q_1r_1},...,M_{p_Mq_Mr_M})$, termed the *moments signature*, is computed for each surface. The Euclidean distance between two moments signatures measures the dissimilarity between the two surfaces.

Experimental Results

As already referred to, experimental work was performed in accordance with the above-described embodiment, to demonstrate that comparison of canonical forms obtained without actual facial surface reconstruction is better than reconstruction and direct comparison of the surfaces. As in experimental work on the previous embodiments, the Yale Face Database B was used. The database consisted of high-resolution grayscale images of different instances of 10 subjects of both Caucasian and Asian type, taken in controlled illumination conditions. Reference is now made to Fig. 36 which shows a single subject illuminated from five different angles. For the five cases, 36A..36E, illumination angles respectively of (0˚,0˚) (0˚,-20˚) (0˚,+20˚) (-25˚,0˚) (+25˚,0˚) are used. Numbers in brackets indicate the azimuth and the elevation angles, respectively, thereby determining the illumination direction. The experiments used instances of the kind shown in Fig. 36 taken from seven different subjects taken from the database.

Direct surface matching consisted of the retrieval of the surface gradient according to equation (6) above using five different illumination directions, reconstruction of the surface according to equation (7), and alignment and computation of the surface moments signature according to equation (25). Canonical forms were computed from the surface gradient, aligned and converted into a moment signature according to equation (25).

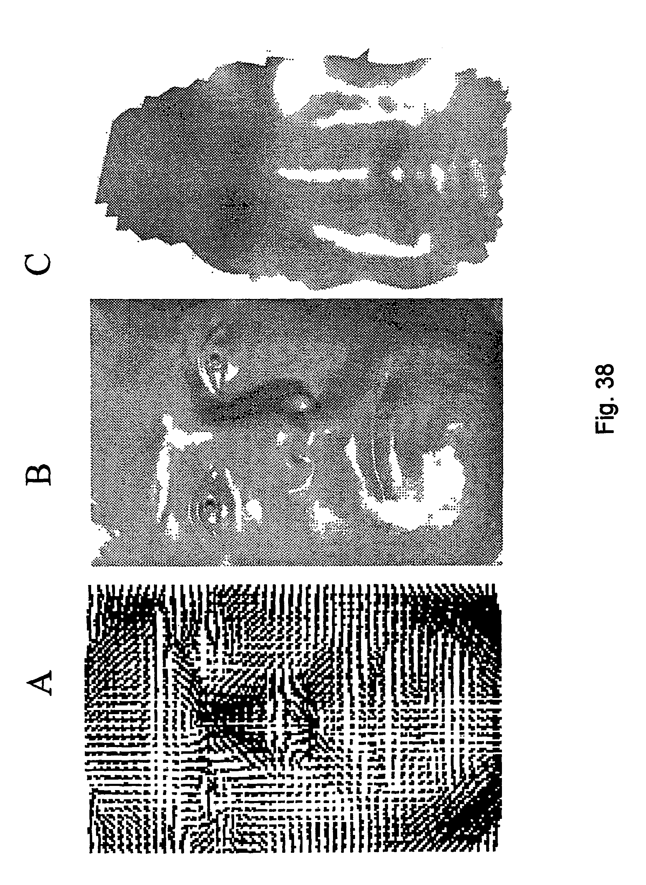

Reference is now made to Fig. 38, which shows three successive stages in processing of the surface data. Fig. 38A shows a surface gradient field, Fig. 38B shows a reconstructed surface, and Fig. 38C shows the bending-invariant canonical form which is represented as a surface. It is stressed that Fig. 38 is shown for explanatory purposes only and, as explained, the present embodiment is able to use the canonical form represented by Fig. 38C without actually reconstructing the surface at any of the processing stages.

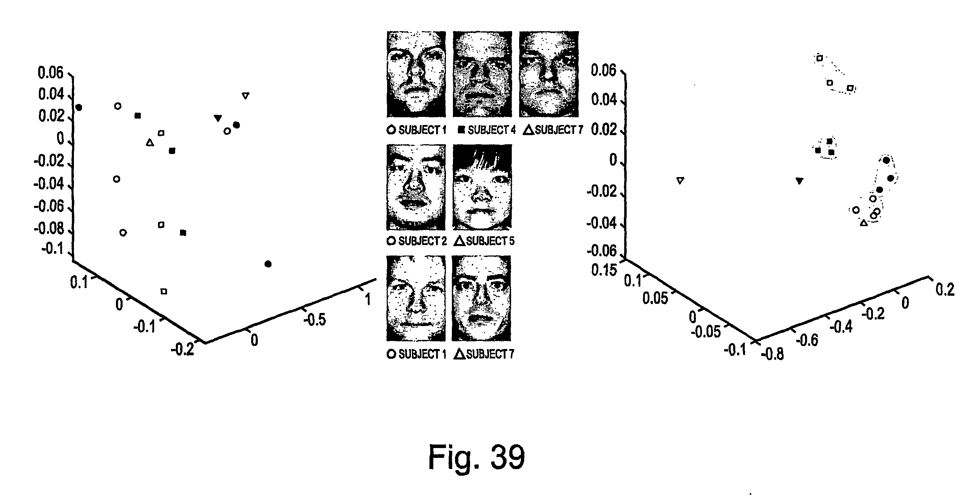

Reference is now made to Fig. 39, which shows a set of faces in the center surrounded by 3D plots of the faces and distances between different faces according to the present embodiments. Visualization of the face recognition results is shown in terms of three-dimensional proximity patterns. Subjects from the face database are represented as points obtained by applying MDS to the relative distances between subjects. Shown in the graph are both straightforward surface matching (A) and canonical forms (B). That is to say, in order to obtain an impression of the accuracy of the embodiment, we converted the relative distances between the subjects produced by each algorithm into 3D proximity patterns. The proximity patterns, representing each subject as a point in $R^3$, were obtained by applying MDS to the relative distances, producing a distortion less than 1%.

The entire cloud of dots was partitioned into clusters formed by instances of the seven subjects, presently referred to as $C_1$-$C_7$. Visually, the more $C_i$ are compact and distant from other clusters, the more accurate is the algorithm. Quantitatively, we measured

    (i) the variance $\sigma_i$ of $C_i$ and

    (ii) the distance $d_i$ between the centroid of $C_i$ and the centroid of the nearest cluster.

Table I shows a quantitative comparison of the algorithms. Inter-cluster distances $di$ are given in the units of of variance $\sigma_i$. The table is limited to the results of $C_1$ to $C_4$.

TABLE I

FACE RECOGNITION ACCURACY

| CLUSTER | $\sigma_{\text{DIRECT}}$ | $d_{\text{DIRECT}}$ | $\sigma_{\text{CANONICAL}}$ | $d_{\text{CANONICAL}}$ |
|---|---|---|---|---|
| $C_1$ | 0.1749 | 0.1704 | 0.0140 | 4.3714 |
| $C_2$ | 0.2828 | 0.3745 | 0.0120 | 5.1000 |
| $C_3$ | 0.0695 | 0.8676 | 0.0269 | 2.3569 |
| $C_4$ | 0.0764 | 0.7814 | 0.0139 | 4.5611 |

The use of canonical forms improved the cluster variance and the inter-cluster distance by about one order of magnitude, compared to direct facial surface matching.

The present embodiment with associated experiment demonstrates how to perform 3D face recognition without reconstructing the facial surface. 3D face recognition based on bending-invariant representations, unlike previously proposed solutions, makes face recognition robust to facial expressions, head orientations and illumination conditions. The present embodiment improves on the previous embodiments discussed herein by allowing an efficient use of simple 3D acquisition techniques (e.g. photometric stereo) for fast and accurate face recognition.

**3D face recognition using eigenforms**

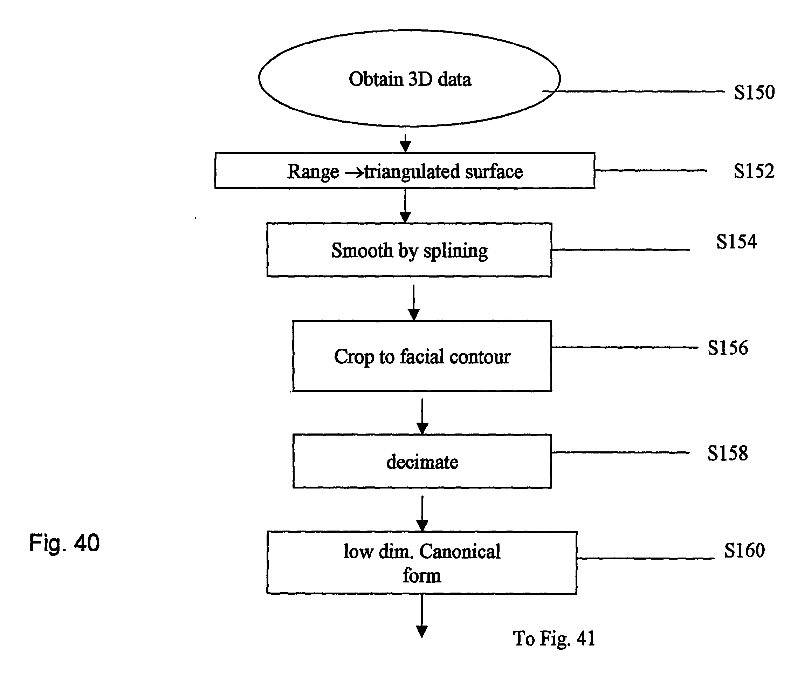

Reference is now made to Fig. 40, which is a simplified flow diagram illustrating a further preferred embodiment of the present invention. In the embodiment of Fig. 40, as a first step, S 150, a range camera is used to acquire a 3D image. The acquired image in fact comprises two separate images, the range image or three-dimensional geometry of the face, and the 2D image or texture of the face. The range image is converted into a triangulated surface in step 152 and smoothed using splining in stage 154. Regions outside the facial contour are cropped in stage 156, and the surface is decimated to the size of approximately 2000-2500 vertices in stage 158. Next, in stage 160, the bending-invariant canonical form of the face is computed and aligned using the procedure described in respect of the previous embodiments.

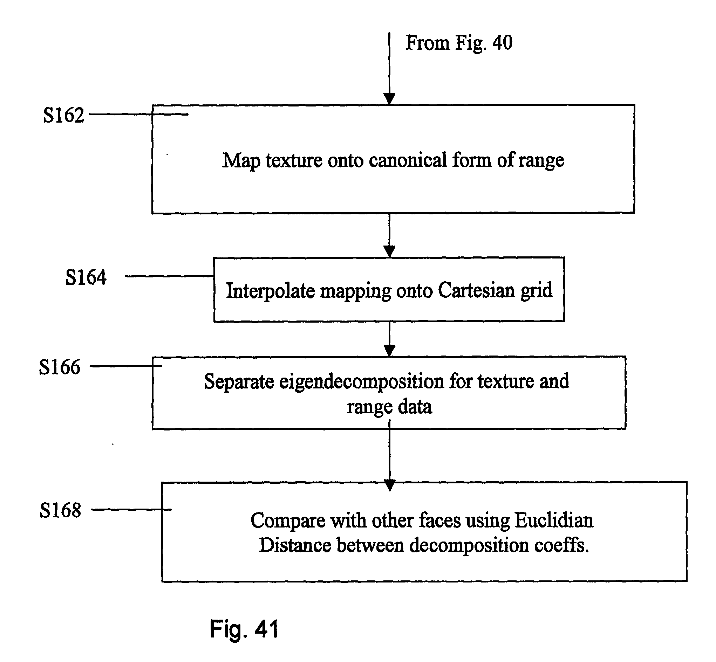

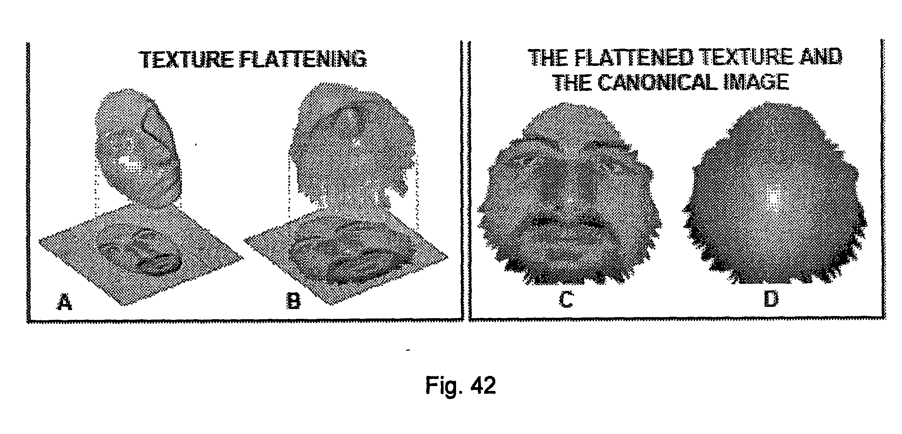

It will be appreciated that there is full correspondence between the texture image pixels and the canonical surface vertices $(x_n^1, x_n^2, x_n^3)$. Thus the face texture image may be mapped onto the aligned canonical surface in the canonical form space, as shown in S162 - Fig. 41. In stage S164 an interpolation is carried out of the texture data and the range data $x_n^3$ onto a Cartesian grid in the X1X2 plane. The result is to obtain flattened texture $\tilde{a}$ and the canonical image $\tilde{x}$ respectively. Both $\tilde{a}$ and $\tilde{x}$ conserve the invariance of the canonical form to isometric transformations, and can be represented as images. Reference is made in this respect to Fig. 42, which illustrates texture flattening in association with the canonical image. More particularly, the figure shows texture flattening by interpolation onto the X1X2 plane as follows: texture mapping on the facial surface (A) and on the canonical form (B); the resulting flattened texture (C) and the canonical image (D).

Application of eigendecomposition is straightforward in this representation. As with eigenfaces, we have a training set, which is now a set of duplets of the form

$$\{\widetilde{x}_n, \widetilde{a}_n\}_{i=1}^N .$$

Returning to Fig. 41, and in stage 166, we apply eigendecomposition separately on the set of $\widetilde{a}$ and $\widetilde{x}$. The result is to produce two sets of eigenspaces corresponding to the flattened textures and the canonical images. We term the respective sets of eigenvectors $_a e_n$ and $_x e_n$ *eigenforms*.

For a new subject represented by $(\widetilde{x}', \widetilde{a}')$, the decomposition coefficients are computed according to

$$\alpha = [e_1^a, ..., e_N^a](\widetilde{a}' - \overline{a}).$$

$$\beta = [e_1^x, ..., e_N^x](\widetilde{x}' - \overline{x}).$$

where a and x denote the average of $\widetilde{a}_n$ and $\widetilde{x}_n$ in the training set, respectively. The distance between two subjects represented by $(\widetilde{x}_1, \widetilde{a}_1)$ and $(\widetilde{x}_2', \widetilde{a}_2')$ may then be computed, stage 168, as the weighted Euclidean distance between the corresponding decomposition coefficients, $(\alpha_1, \beta_1)$ and $(\alpha_2, \beta_2)$.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

**Claims**

1.  Apparatus for processing 3-dimensional data of a geometric body for matching, wherein said geometric body is a face, having soft geometric regions, being regions of said face susceptible to short term geometric changes, and hard geometric regions, being regions substantially insusceptible to said short term geometric changes, said apparatus comprising:

    a geodesic converter (20), for receiving an input comprising 3-dimensional topographical data of said geometric body, and for converting said data into a series of geodesic distances between pairs of points of said data;
    a triangulator (14) connected prior to said geodesic converter to receive said 3-dimensional topographical data and to form therefrom a manifold by triangulation, said manifold being used as said input of said geodesic converter;
    a multi-dimensional scaler (22), connected subsequently to said geodesic converter, for forming a low dimensional Euclidean representation of said series of geodesic distances, said low dimensional Euclidean representation providing a bending invariant representation of said geometric body suitable for matching with other geometric shapes;
    a subsampler (18) located after said triangulator and prior to said geodesic converter, configured to subsample said triangulated manifold, and to provide to said geodesic converter a subsampled triangulated manifold:

    a preprocessor (16), located prior to said subsampler, for removing said soft geometric regions from said face, wherein said preprocessor is operable to cany out removal of said soft regions by application of a geodesic mask.

2.  Apparatus according to claim 1, wherein said geodesic converter comprises:

a feature for selection of n vertices,
a feature for using fast marching for triangulated domains to calculate geodesic distances from said n vertices to vertices of said three-dimensional topographical data, and
a tabulator for forming a distance matrix from said geodesic distances.

3. Apparatus according to claim 2, wherein said multi-dimensional scaler is connected to obtain said series of geodesic distances from said distance matrix.

4. Apparatus according to claim 1, wherein said manifold comprises a plurality of vertices and wherein said subsampler is operable to select a first vertex and to iteratively select a next vertex having a largest geodesic distance from vertices already selected, until a predetermined number of vertices has been selected.

5. Apparatus according to claim 4, wherein said subsampler is operable to use the fast marching method for triangulated domains to calculate geodesic distances between vertices for said iterative selection.

6. Apparatus according to claim 1, wherein said preprocessor is operable to identify said soft regions by identification of an orientation point on said face.

7. Apparatus according to claim 6, wherein said orientation point is at least one of a nose tip, a pair of eyeball centers and a mouth center.

8. Apparatus according to claim 1, wherein said preprocessor is further operable to center said face.

9. Apparatus according to claim 1, wherein said preprocessor is further operable to crop said face.

10. Apparatus according to claim 1, wherein said geodesic converter is operable to use the fast marching method for triangulated domains to calculate said geodesic distances.

11. Apparatus according to claim 1, further comprising a triangulator for forming said triangulated manifold from scan data of a geometric body.

12. Apparatus according to claim 11, further operable to embed said triangulated manifold into a space of higher than two dimensions.

13. Apparatus according to claim 12, wherein said embedding is such as to allow inclusion of additional information, said additional information being any one of a group comprising texture information, albedo information, grayscale information, and color information.

14. Apparatus according to claim 1, wherein said subsampler comprises an optimizer for allowing a user to select an optimum subsampling level by defining a trade-off between calculation complexity and representation accuracy.

15. Apparatus according to claim 1, wherein said multi-dimensional scalar is configured such that said Euclidean representation comprises a predetermined number of eigenvalues extractable to be used as co-ordinates in a feature space.

16. Apparatus according to claim 15, wherein said predetermined number of eigenvalues is at least three, and said feature space has a number of dimensions corresponding to said predetermined number.

17. Apparatus according to claim 1, wherein said multi-dimensional scaler is followed by a mapper for mapping texture data of said three-dimensional surface onto said low dimensional Euclidian representation.

18. Apparatus according to claim 17, further comprising an interpolator connected after said mapper for interpolating said Euclidian representation with texture mapping onto a Cartesian grid.

19. Apparatus according to claim 18, comprising an Eigendecomposition unit configured to carry out separate Eigendecomposition of surface and texture data respectively from said Cartesian grid, thereby to form pairs of Eigendecomposition coefficients for texture and surface respectively.

20. Apparatus according to claim 19, further comprising a comparator for using said pairs of Eigendecomposition coefficients to calculate distances to other geometric bodies, said distances being thresholdable for said matching.

21. Apparatus according to claim 20, wherein said distances are weighted Euclidian distances.

22. Apparatus according to claim 1, wherein:

   said geodesic converter comprises an input for receiving representations of geometric bodies as Euclidean representations of sets of geodesic distances between sampled points of a triangulated manifold, said Euclidean representations being substantially bending invariant representations, and there is provided:

   a distance calculator (32) for calculating distances between respective geometric bodies based on said Euclidean representation and
   a thresholder (38) for thresholding a calculated distance to determine the presence or absence of a match.

23. Apparatus according to claim 22, wherein said distance calculator comprises:

   an Eigenvalue extractor (37) for extracting a predetermined number of Eigenvalues from said Euclidean representations, and
   a plotter (39) for plotting said predetermined number of eigenvalues as a point on a feature space having a dimension for each of said predetermined number of Eigenvalues,

   and wherein said thresholder is configured to be sensitive to clustering within said feature space, thereby to determine said presence or absence of said match.

24. Apparatus according to claim 23, wherein said predetermined number is three.

25. Apparatus according to claim 22, wherein said Euclidean representation is based upon geodesic distances between a subsampling of points of said triangulated manifold.

26. Apparatus according to claim 22, wherein said geometric body is a face, having soft geometric regions, being regions susceptible to short term geometric change and hard geometric regions, being regions substantially insusceptible to short term geometric changes, and wherein said Euclidean representation is substantially limited to said hard geometric regions.

27. Apparatus according to claim 22, wherein said distance calculator is configured to use the Hausdorff metric.

28. Apparatus for obtaining 3-dimensional data of a geometric body for matching, and using said data to carry out matching between different bodies wherein said geometric body is a face, having soft geometric regions and hard geometric regions, said apparatus comprising:

   a three dimensional scanner (12) for obtaining three-dimensional topographical data of said body;
   a triangulator (14) for receiving said three-dimensional topographical data of said geometric body and forming said data into a triangulated manifold;
   a geodesic converter (20), connected subsequently to said triangulator, for converting said triangulated manifold into a series of geodesic distances between pairs of points of said manifold;
   a multi-dimensional scaler (22), connected subsequently to said geodesic converter, for forming a low dimensional Euclidean representation of said series of geodesic distances, said low dimensional Euclidean representation providing a bending invariant representation of said geometric body;
   a distance calculator (32), connected subsequently to said multi-dimensional scaler, for calculating distances between geometric bodies based on said Euclidean representation;
   a thresholder (38), connected subsequently to said distance calculator, for thresholding a calculated distance to determine the presence or absence of a match;
   a subsampler (18) located between said triangulator and said geodesic converter, configured to subsample said triangulated manifold, and to provide to said geodesic converter a subsampled triangulated manifold; and
   a preprocessor (16), located between said triangulator and said subsampler, for removing said soft geometric regions from said face; wherein said preprocessor is operable to carry out removal of said soft regions by application of a geodesic mask.

**29.** Apparatus according to claim 28, wherein said distance calculator comprises:

an eigenvalue extractor (37) for extracting a predetermined number of eigenvalues from said Euclidean representations; and

a plotter (39) for plotting said predetermined number of Eigenvalues as a point on a feature space having a dimension for each of said predetermined number of eigenvalues; and wherein said thresholder is configured to be sensitive to clustering within said feature space, thereby to determine said presence or absence of said match.

**30.** Apparatus according to claim 29, wherein said predetermined number is three.

**31.** Apparatus according to claim 29, wherein said predetermined number is greater than three.

**32.** Apparatus according to claim 28, wherein said subsampler is operable to use geodesic distances in selecting points from said triangulated manifold to include in said subsampled triangulated manifold.

**33.** Apparatus according to claim 32, wherein said subsampler is configured to take an initial point and then iteratively to select points by taking points furthest away in terms of a geodesic distance from already selected points.

**34.** Apparatus according to claim 28, wherein said geometric body is a face, having soft geometric regions and hard geometric regions, said apparatus comprising a preprocessor, located between said triangulator and said geodesic converter, for removing said soft geometric regions from said face.

**35.** Apparatus according to claim 32, wherein said preprocessor is operable to identify said soft regions by identification of an orientation point on said face.

**36.** Apparatus according to claim 28, wherein said orientation point is a nose tip.

**37.** Apparatus according to claim 28, wherein said preprocessor is further operable to center said face.

**38.** Apparatus according to claim 28, wherein said preprocessor is further operable to crop said face.

**39.** Apparatus according to claim 28, wherein said geodesic converter is operable to use the fast marching method for triangulated domains to calculate said geodesic distances.

**40.** Apparatus according to claim 28, wherein said geodesic converter is operable to use the fast marching method for triangulated domains to calculate said geodesic distances directly from manifold gradient fields without intervening reconstruction of the corresponding surface.

**41.** Apparatus according to claim 28, further comprising an optimizer for allowing a user to select an optimum subsampling level by defining a trade-off between calculation complexity and representation accuracy.

**42.** Apparatus according to claim 28, wherein said distance calculator is configured to use the Hausdorff metric.

**43.** A method of image preprocessing of three-dimensional topographical data for subsequent classification, wherein said geometric body is a face, having soft geometric regions and hard geometric regions, the method comprising:

providing said three-dimensional topographical data as a three-dimensional triangulated manifold,
subsampling said triangulated manifold,
generating a matrix of geodesic distances to selected vertices of said manifold,
removing said soft geometric regions from said face by application of a geodesic mask; and
using multi-dimensional scaling to reduce said matrix to a canonical representation in a low-dimensional Euclidean space, thereby to provide a representation suitable for subsequent classification.

**44.** The method of claim 43, further comprising selecting said vertices for generating said matrix of geodesic distances by a procedure comprising iteratively selecting a next vertex having a largest geodesic distance from vertices already selected, until a predetermined number of vertices has been selected.

**45.** The method of claim 44, comprising determining geodesic distances for said procedure using the fast marching method for triangulated domains.

**46.** The method of claim 43, wherein said three-dimensional topographical data is a representation of a face, and further comprising cropping said face to exclude parts of said face being susceptible to short term changes, thereby to render said subsequent classification substantially invariant to said short term changes.

**47.** A method of classifying 3-dimensional data of three-dimensional bodies having surfaces, wherein said three dimensional bodies comprise faces having soft geometric regions and hard geometric regions, the method comprising:

obtaining representations of said three dimensional bodies as canonical form representations derived from geodesic distances between selected sample points taken from said surfaces of said three-dimensional bodies; removing said soft geometric regions from said face by application of a geodesic mask; from each representation deriving co-ordinates on a feature space; and classifying said bodies according to clustering on said feature space.

**48.** The method of claim 47, wherein said deriving co-ordinates comprises deriving first m eigenvalues from respective canonical form representations, where n is a predetermined number, and using said m eigenvalues to provide said co-ordinates, said feature space being constructed to have n dimensions.

**49.** The method of claim 48, wherein n is at least three.

**50.** The method of claim 48, wherein n is three.

**Patentansprüche**

**1.** Vorrichtung zum Verarbeiten von dreidimensionalen Daten eines geometrischen Körpers zur Anpassung, wobei der geometrische Körper ein Gesicht mit weichen geometrischen Regionen, die Regionen des Gesichts sind, die für kurzfristige geometrische Änderungen empfänglich sind, und harten geometrischen Regionen ist, die Regionen sind, die im Wesentlichen unempfänglich für die kurzfristigen geometrischen Änderungen sind, wobei die Vorrichtung umfasst:

einen geodätischen Konverter (20) zum Empfangen einer Eingabe, die dreidimensionale topografische Daten des geometrischen Körpers umfasst, und zum Konvertieren der Daten in eine Reihe von geodätischen Entfernungen zwischen Paaren von Punkten der Daten; einen Triangulator (14), der dem geodätischen Konverter vorgeschaltet ist, um die dreidimensionalen topografischen Daten zu empfangen und daraus durch Triangulation eine Mannigfaltigkeit zu bilden, wobei die Mannigfaltigkeit als die Eingabe des geodätischen Konverters verwendet wird; einen multidimensionalen Skalierer (22), der dem geodätischen Konverter nachgeschaltet ist, zum Bilden einer niedrigdimensionalen euklidischen Darstellung der Reihe von geodätischen Entfernungen, wobei die niedrigdimensionale euklidische Darstellung eine invariante Krümmungsdarstellung des geometrischen Körpers bereitstellt, die zur Anpassung an andere geometrischen Formen geeignet ist; einen Unterabtaster (18), der nach dem Triangulator und vor dem geodätischen Konverter angeordnet und so konfiguriert ist, dass er die triangulierte Mannigfaltigkeit unterabtastet und eine unterabgetastete triangulierte Mannigfaltigkeit an den geodätischen Konverter liefert; einen Vorprozessor (16), der vor dem Unterabtaster angeordnet ist, zum Entfernen der weichen geometrischen Regionen aus dem Gesicht, wobei der Vorprozessor so betrieben werden kann, dass er die Entfernung der weichen Regionen durch Anwendung einer geodätischen Maske durchführt.

**2.** Vorrichtung nach Anspruch 1, wobei der geodätische Konverter umfasst; ein Merkmal zur Auswahl von n Ecken; ein Merkmal zur Verwendung von Fast Marching für triangulierte Bereiche, um geodätische Entfernungen von den n Ecken zu Ecken der dreidimensionalen topografischen Daten zu berechnen, und eine Tabelliereinrichtung zum Erstellen einer Entfernungsmatrix aus den geodätischen Entfernungen.

**3.** Vorrichtung nach Anspruch 2, wobei der multidimensionale Skalierer angeschlossen ist, um die Reihe von geodätischen Entfernungen aus der Entfernungsmatrix zu erhalten.

**4.** Vorrichtung nach Anspruch 1, wobei die Mannigfaltigkeit eine Mehrzahl von Ecken umfasst, und wobei der Unterabtaster so betrieben werden kann, dass er eine erste Ecke auswählt und iterativ eine nächste Ecke mit der größten geodätischen Entfernung von bereits ausgewählten Ecken auswählt, bis eine vorgegebene Anzahl von Ecken ausgewählt wurde.

**5.** Vorrichtung nach Anspruch 4, wobei der Unterabtaster so betrieben werden kann, dass er das Fast-Marching-Verfahren für triangulierte Bereiche verwendet, um geodätische Entfernungen zwischen Ecken für die iterative Auswahl zu berechnen.

**6.** Vorrichtung nach Anspruch 1, wobei der Vorprozessor so betrieben werden kann, dass er die weichen Regionen durch Identifizierung eines Orientierungspunkts auf dem Gesicht identifiziert.

**7.** Vorrichtung nach Anspruch 6, wobei der Orientierungspunkt wenigstens eines von einer Nasenspitze, einem Paar von Augapfelmitten und einer Mundmitte ist.

**8.** Vorrichtung nach Anspruch 1, wobei der Vorprozessor ferner so betrieben werden kann, dass er das Gesicht zentriert.

**9.** Vorrichtung nach Anspruch 1, wobei der Vorprozessor ferner so betrieben werden kann, dass er das Gesicht beschneidet.

**10.** Vorrichtung nach Anspruch 1, wobei der geodätische Konverter so betrieben werden kann, dass er das Fast-Marching-Verfahren für triangulierte Bereiche verwendet, um die geodätischen Entfernungen zu berechnen.

**11.** Vorrichtung nach Anspruch 1, ferner umfassend einen Triangulator zum Bilden der triangulierten Mannigfaltigkeit aus Abtastdaten eines geometrischen Körpers.

**12.** Vorrichtung nach Anspruch 11, die ferner so betrieben werden kann, dass sie die triangulierte Mannigfaltigkeit in einen Raum von mehr als zwei Dimensionen einbettet.

**13.** Vorrichtung nach Anspruch 12, wobei die Einbettung derart ist, dass sie eine Aufnahme von zusätzlichen Informationen ermöglicht, wobei die zusätzlichen Informationen beliebige aus einer Gruppe sind, die Texturinformationen, Albedo-Informationen, Graustufeninformationen und Farbinformationen umfasst.

**14.** Vorrichtung nach Anspruch 1, wobei der Unterabtaster einen Optimierer umfasst, um einem Anwender zu ermöglichen, ein optimales Unterabtastungsniveau durch Definieren eines Kompromisses zwischen Berechnungskomplexität und Darstellungsgenauigkeit auszuwählen.

**15.** Vorrichtung nach Anspruch 1, wobei der multidimensionale Skalierer derart konfiguriert ist, dass die euklidische Darstellung eine vorgegebene Anzahl von Eigenwerten umfasst, die extrahiert werden können, um als Koordinaten in einem Merkmalsraum verwendet zu werden.

**16.** Vorrichtung nach Anspruch 15, wobei die vorgegebene Anzahl von Eigenwerten wenigstens drei beträgt, und der Merkmalsraum eine Anzahl von Dimensionen aufweist, die der vorgegebenen Anzahl entspricht.

**17.** Vorrichtung nach Anspruch 1, wobei auf den multidimensionalen Skalierer ein Mapper zum Abbilden von Texturdaten der dreidimensionalen Fläche auf die niedrigdimensionale euklidische Darstellung folgt.

**18.** Vorrichtung nach Anspruch 17, ferner umfassend einen Interpolator, der dem Mapper nachgeschaltet ist, zum Interpolieren der euklidischen Darstellung mit der Texturabbildung auf ein kartesisches Netz.

**19.** Vorrichtung nach Anspruch 18, umfassend eine Eigendekompositionseinheit, die so konfiguriert ist, dass sie eine getrennte Eigendekomposition von Flächen- bzw. Texturdaten aus dem kartesischen Netz durchführt, um dadurch Paare von Eigendekompositionskoeffizienten für Textur bzw. Fläche zu bilden.

**20.** Vorrichtung nach Anspruch 19, ferner umfassend einen Komparator zum Verwenden der Paare von Eigendekompositionskoeffizienten, um Entfernungen zu anderen geometrischen Körpern zu berechnen, wobei die Entfernungen für die Anpassung schwellenwenfähig sind.

**21.** Vorrichtung nach Anspruch 20, wobei die Entfernungen gewichtete euklidische Entfernungen sind.

**22.** Vorrichtung nach Anspruch 1, wobei:

der geodätische Konverter einen Eingang zum Empfangen von Darstellungen von geometrischen Körpern als euklidische Darstellungen von Sätzen von geodätischen Entfernungen zwischen abgetasteten Punkten einer triangulierten Mannigfaltigkeit umfasst, die euklidischen Darstellungen im Wesentlichen invariante Krümmungsdarstellungen sind, und vorgesehen ist:

ein Entfernungsrechner (32) zum Berechnen von Entfernungen zwischen jeweiligen geometrischen Körpern auf der Basis der euklidischen Darstellung, und
ein Thresholder (38) zum Festlegen von Schwellenwerten für eine berechnete Entfernung, um das Vorhandensein oder Nichtvorhandensein einer Anpassung zu bestimmen.

**23.** Vorrichtung nach Anspruch 22, wobei der Entfernungsrechner umfasst:

einen Eigenwertextraktor (37) zum Extrahieren einer vorgegebenen Anzahl von Eigenwerten aus den euklidischen Darstellungen, und
einen Plotter (39) zum Eintragen der vorgegebenen Anzahl von Eigenwerten als Punkt in einem Merkmalsraum mit einer Dimension für jeden der vorgegebenen Anzahl von Eigenwerten,
und wobei der Thresholder so konfiguriert ist, dass er für Clustering innerhalb des Merkmalsraums empfindlich ist, um dadurch das Vorhandensein oder Nichtvorhandensein der Anpassung zu bestimmen.

**24.** Vorrichtung nach Anspruch 23, wobei die vorgegebene Anzahl drei beträgt.

**25.** Vorrichtung nach Anspruch 22, wobei die euklidische Darstellung auf geodätischen Entfernungen zwischen einer Unterabtastung von Punkten der triangulierten Mannigfaltigkeit beruht.

**26.** Vorrichtung nach Anspruch 22, wobei der geometrische Körper ein Gesicht mit weichen geometrischen Regionen, die Regionen des Gesichts sind, die für kurzfristige geometrische Änderungen empfänglich sind, und harten geometrischen Regionen ist, die Regionen sind, die im Wesentlichen unempfänglich für kurzfristige geometrische Änderungen sind, und wobei die euklidische Darstellung im Wesentlichen auf die harten geometrischen Regionen beschränkt ist.

**27.** Vorrichtung nach Anspruch 22, wobei der Entfernungsrechner so konfiguriert ist, dass er die Hausdorff-Metrik verwendet.

**28.** Vorrichtung zum Erhalten von dreidimensionalen Daten eines geometrischen Körpers zur Anpassung und Verwenden der Daten, um eine Anpassung zwischen verschiedenen Körpern durchzuführen, wobei der geometrische Körper ein Gesicht mit weichen geometrischen Regionen und harten geometrischen Regionen ist, und die Vorrichtung umfasst:

einen dreidimensionalen Scanner (12) zum Erhalten von dreidimensionalen topografischen Daten des Körpers;
einen Triangulator (14) zum Empfangen der dreidimensionalen topografischen Daten des geometrischen Körpers und Umformen der Daten in eine triangulierte Mannigfaltigkeit;
einen geodätischen Konverter (20), der dem Triangulator nachgeschaltet ist, zum Konvertieren der triangulierten Mannigfaltigkeit in eine Reihe von geodätischen Entfernungen zwischen Paaren von Punkten der Mannigfaltigkeit;
einen multidimensionalen Skalierer (22), der dem geodätischen Konverter nachgeschaltet ist, zum Bilden einer niedrigdimensionalen euklidischen Darstellung der Reihe von geodätischen Entfernungen, wobei die niedrigdimensionalen euklidische Darstellung eine invariante Krümmungsdarstellung des geometrischen Körpers bereitstellt;
einen Entfernungsrechner (32), der dem multidimensionalen Skalierer nachgeschaltet ist, zum Berechnen von Entfernungen zwischen geometrischen Körpern auf der Basis der euklidischen Darstellung,
einen Thresholder (38), der dem Entfernungsrechner nachgeschaltet ist, zum Festlegen von Schwellenwerten für eine berechnete Entfernung, um das Vorhandensein oder Nichtvorhandensein einer Anpassung zu bestimmen;
einen Unterabtaster (18), der zwischen dem Triangulator und dem geodätischen Konverter angeordnet und so konfiguriert ist, dass er die triangulierte Mannigfaltigkeit unterabtastet und eine unterabgetastete triangulierte Mannigfaltigkeit an den geodätischen Konverter liefert; und

einen Vorprozessor (16), der zwischen dem Triangulator und dem Unterabtaster angeordnet ist, zum Entfernen der weichen geometrischen Regionen aus dem Gesicht; wobei der Vorprozessor so betrieben werden kann, dass er die Entfernung der weichen Regionen durch Anwendung einer geodätischen Maske durchführt.

29. Vorrichtung nach Anspruch 28, wobei der Entfernungsrechner umfasst:

einen Eigenwertextraktor (37) zum Extrahieren einer vorgegebenen Anzahl von Eigenwerten aus den euklidischen Darstellungen, und

einen Plotter (39) zum Eintragen der vorgegebenen Anzahl von Eigenwerten als Punkt in einem Merkmalsraum mit einer Dimension für jeden der vorgegebenen Anzahl von Eigenwerten, und wobei der Thresholder so konfiguriert ist, dass er für Clustering innerhalb des Merkmalsraums empfindlich ist, um dadurch das Vorhandensein oder Nichtvorhandensein der Anpassung zu bestimmen.

30. Vorrichtung nach Anspruch 29, wobei die vorgegebene Anzahl drei beträgt.

31. Vorrichtung nach Anspruch 29, wobei die vorgegebene Anzahl höher als drei ist.

32. Vorrichtung nach Anspruch 28, wobei der Unterabtaster so betrieben werden kann, dass er geodätische Entfernungen beim Auswählen von Punkten aus der triangulierten Mannigfaltigkeit verwendet, die in die unterabgetastete triangulierte Mannigfaltigkeit aufzunehmen sind.

33. Vorrichtung nach Anspruch 32, wobei der Unterabtaster so konfiguriert ist, dass er einen Anfangspunkt nimmt und dann iterativ Punkte auswählt, indem er Punkte nimmt, die in Bezug auf eine geodätische Entfernung von bereits ausgewählten Punkten am weitesten entfernt sind.

34. Vorrichtung nach Anspruch 28, wobei der geometrische Körper ein Gesicht mit weichen geometrischen Regionen und harten geometrischen Regionen ist, und die Vorrichtung einen Vorprozessor, der zwischen dem Triangulator und dem geodätischen Konverter angeordnet ist, zum Entfernen der weichen geometrischen Regionen aus dem Gesicht umfasst.

35. Vorrichtung nach Anspruch 32, wobei der Vorprozessor so betrieben werden kann, dass er die weichen Regionen durch Identifizierung eines Orientierungspunkts auf dem Gesicht identifiziert.

36. Vorrichtung nach Anspruch 28, wobei der Orientierungspunkt eine Nasenspitze ist.

37. Vorrichtung nach Anspruch 28, wobei der Vorprozessor ferner so betrieben werden kann, dass er das Gesicht zentriert.

38. Vorrichtung nach Anspruch 28, wobei der Vorprozessor ferner so betrieben werden kann, dass er das Gesicht beschneidet.

39. Vorrichtung nach Anspruch 28, wobei der geodätische Konverter so betrieben werden kann, dass er das Fast-Marching-Verfahren für triangulierte Bereiche verwendet, um die geodätischen Entfernungen zu berechnen.

40. Vorrichtung nach Anspruch 28, wobei der geodätische Konverter so betrieben werden kann, dass er das Fast-Marching-Verfahren für triangulierte Bereiche verwendet, um die geodätischen Entfernungen direkt aus Mannigfaltigkeitsgradientenfeldern zu berechnen, ohne in eine Wiederherstellung der entsprechenden Fläche einzugreifen.

41. Vorrichtung nach Anspruch 28, ferner umfassend einen Optimierer, um einem Anwender zu ermöglichen, ein optimales Unterabtastungsniveau durch Definieren eines Kompromisses zwischen Berechnungskomplexität und Darstellungsgenauigkeit auszuwählen.

42. Vorrichtung nach Anspruch 28, wobei der Entfernungsrechner so konfiguriert ist, dass er die Hausdorff-Metrik verwendet.

43. Verfahren zur Bildvorverarbeitung von dreidimensionalen topografischen Daten zur nachfolgenden Klassifizierung, wobei der geometrische Körper ein Gesicht mit weichen geometrischen Regionen und harten geometrischen Regionen ist, und das Verfahren umfasst:

Bereitstellen der dreidimensionalen topografischen Daten als eine dreidimensionale triangulierte Mannigfaltigkeit,
Unterabtasten der triangulierten Mannigfaltigkeit,
Erzeugen einer Matrix von geodätischen Entfernungen, um Ecken der Mannigfaltigkeit auszuwählen,
Entfernen der weichen geometrischen Regionen aus dem Gesicht durch Anwendung einer geodätischen Maske; und
Verwenden von multidimensionaler Skalierung, um die Matrix auf eine kanonische Darstellung in einem niedrigdimensionalen euklidischen Raum zu reduzieren, um dadurch eine Darstellung bereitzustellen, die zur nachfolgenden Klassifizierung geeignet ist.

44. Verfahren nach Anspruch 43, ferner umfassend ein Auswählen der Ecken zum Erzeugen der Matrix von geodätischen Entfernungen durch einen Vorgang, der iteratives Auswählen einer nächsten Ecke mit einer größten geodätischen Entfernung von bereits ausgewählten Ecken, bis eine vorgegebene Anzahl von Ecken ausgewählt wurde, umfasst.

45. Verfahren nach Anspruch 44, umfassend ein Bestimmen von geodätischen Entfernungen für den Vorgang unter Verwendung des Fast-Marching-Verfahrens für triangulierte Bereiche.

46. Verfahren nach Anspruch 43, wobei es sich bei den dreidimensionalen topografischen Daten um eine Darstellung eines Gesichts handelt, und ferner umfassend ein Beschneiden des Gesichts, um Teile des Gesichts auszuschließen, die für kurzfristige Änderungen empfänglich sind, um dadurch die nachfolgende Klassifizierung im Wesentlichen invariant gegen kurzfristige Änderungen zu machen.

47. Verfahren zum Klassifizieren von dreidimensionalen Daten von dreidimensionalen Körpern mit Flächen, wobei die dreidimensionalen Körper Gesichter mit weichen geometrischen Regionen und harten geometrischen Regionen umfassen, und das Verfahren umfasst:

Erhalten von Darstellungen der dreidimensionalen Körper als kanonische Formdarstellungen, die von geodätischen Entfernungen zwischen ausgewählten Abtastpunkten abgleitet sind, die von den Flächen der dreidimensionalen Körpern genommen werden;
Entfernen der weichen geometrischen Regionen aus dem Gesicht durch Anwendung einer geodätischen Maske;
Ableiten von Koordinaten in einem Merkmalsraum von jeder Darstellung; und
Klassifizieren der Körper gemäß der Clusterung in dem Merkmalsraum.

48. Verfahren nach Anspruch 47, wobei das Ableiten von Koordinaten ein Ableiten von ersten m Eigenwerten von jeweiligen kanonischen Formdarstellungen umfasst, wobei n eine vorgegebene Anzahl ist, und Verwenden der m Eigenwerte, um die Koordinaten bereitzustellen, wobei der Merkmalsraum so aufgebaut ist, dass er n Dimensionen aufweist,

49. Verfahren nach Anspruch 48, wobei n mindestens drei ist.

50. Verfahren nach Anspruch 48, wobei n drei ist.

## Revendications

1. Appareil pour traiter des données en trois dimensions d'un corps géométrique pour la correspondance, dans lequel ledit corps géométrique est un visage, ayant des régions géométriques molles, qui sont des régions dudit visage susceptibles de subir des changements géométriques à court terme, et des régions géométriques dures, qui sont des régions sensiblement non susceptibles de subir des changements géométriques à court terme, ledit appareil comprenant :

un convertisseur géodésique (20) pour recevoir une entrée comprenant des données topographiques tridimensionnelles dudit corps géométrique, et pour convertir lesdites données en une série de distances géodésiques entre des paires de points desdites données ;

un triangulateur (14) raccordé au préalable audit convertisseur géodésique pour recevoir lesdites données topographiques tridimensionnelles et pour former à partir de celles-ci une variété par triangulation, ladite variété étant utilisée en tant qu'entrée dudit convertisseur géodésique ;

une échelle de comptage multidimensionnelle (22), raccordée ensuite audit convertisseur géodésique, pour former une représentation euclidienne de petite dimension de ladite série de distances géodésiques, ladite représentation euclidienne de petite dimension fournissant une représentation invariante de flexion dudit corps géométrique appropriée pour correspondre avec d'autres formes géométriques ;

un sous-échantillonneur (18) positionné après ledit triangulateur et avant ledit convertisseur géodésique, configuré pour sous-échantillonner ladite variété triangulée, et pour fournir audit convertisseur géodésique une variété triangulée sous-échantillonnée :

un préprocesseur (16) positionné avant ledit sous-échantillonneur, pour retirer lesdites régions géométriques molles dudit visage, dans lequel ledit préprocesseur peut fonctionner pour réaliser le retrait desdites régions molles en appliquant un masque géodésique.

**2.** Appareil selon la revendication 1, dans lequel ledit convertisseur géodésique comprend :

un attribut pour la sélection de n sommets,
un attribut pour utiliser la marche rapide pour les domaines triangulés afin de calculer des distances géodésiques desdits n sommets jusqu'aux sommets desdites données topographiques tridimensionnelles, et
un tabulateur pour former une matrice de distances à partir desdites distances géodésiques.

**3.** Appareil selon la revendication 2, dans lequel ladite échelle de comptage multidimensionnelle est raccordée pour obtenir ladite série de distances géodésiques à partir de ladite matrice de distances.

**4.** Appareil selon la revendication 1, dans lequel ladite variété comprend une pluralité de sommets et dans lequel ledit sous-échantillonneur peut fonctionner pour sélectionner un premier sommet et sélectionner de manière itérative un prochain sommet ayant la plus grande distance géodésique par rapport aux sommets déjà sélectionnés, jusqu'à ce qu'un nombre prédéterminé de sommets aient été sélectionnés,

**5.** Appareil selon la revendication 4, dans lequel ledit sous-échantillonneur peut fonctionner pour utiliser la méthode de marche rapide pour les domaines triangulés afin de calculer des distances géodésiques entre les sommets pour ladite sélection itérative.

**6.** Appareil selon la revendication 1, dans lequel ledit préprocesseur peut fonctionner pour identifier lesdites régions molles en identifiant un point d'orientation sur ledit visage.

**7.** Appareil selon la revendication 6, dans lequel ledit point d'orientation est au moins l'un parmi le bout d'un nez, une paire de centres de globe oculaire et un centre de la bouche.

**8.** Appareil selon la revendication 1, dans lequel ledit préprocesseur peut en outre fonctionner pour centrer ledit visage.

**9.** Appareil selon la revendication 1, dans lequel ledit préprocesseur peut en outre fonctionner pour cadrer ledit visage.

**10.** Appareil selon la revendication 1, dans lequel ledit convertisseur géodésique peut fonctionner pour utiliser le procédé de marche rapide pour les domaines triangulés afin de calculer lesdites distances géodésiques,

**11.** Appareil selon la revendication 1, comprenant en outre un triangulateur pour former ladite variété triangulée à partir de données de balayage d'un corps géométrique.

**12.** Appareil selon la revendication 11, pouvant en outre fonctionner pour intégrer ladite variété triangulée dans un espace supérieur à deux dimensions.

**13.** Appareil selon la revendication 12, dans lequel ladite intégration est telle qu'elle permet d'inclure des informations supplémentaires, lesdites informations supplémentaires étant l'une quelconque d'un groupe comprenant des informations de texture, des informations d'albédo, des informations d'échelle de gris, et des informations de couleur,

**14.** Appareil selon la revendication 1, dans lequel le sous-échantillonneur comprend un dispositif d'optimisation pour permettre à l'utilisateur de sélectionner un niveau de sous-échantillonnage optimal en définissant un compromis entre la complexité de calcul et la précision de représentation.

**15.** Appareil selon la revendication 1, dans lequel ladite échelle de comptage multidimensionnelle est configurée de sorte que ladite représentation euclidienne comprend un nombre prédéterminé de valeurs propres extractibles pour être utilisées en tant que coordonnées dans un espace des attributs.

**16.** Appareil selon la revendication 15, dans lequel ledit nombre prédéterminé de valeurs propres est au moins trois, et ledit espace des attributs a un nombre de dimensions correspondant audit nombre prédéterminé.

**17.** Appareil selon la revendication 1, dans lequel ladite échelle de comptage multidimensionnelle est suivie par un dispositif de cartographie pour cartographier des données de texture de ladite surface tridimensionnelle sur ladite représentation euclidienne de petite dimension.

**18.** Appareil selon la revendication 17, comprenant en outre un interpolateur raccordé après ledit dispositif de cartographie pour interpoler ladite représentation euclidienne avec la cartographie de texture sur une grille cartésienne.

**19.** Appareil selon la revendication 18, comprenant une unité de décomposition propre configurée pour réaliser la séparation de la décomposition propre des données de surface et de texture respectivement de ladite grille cartésienne, pour former ainsi des paires de coefficients de décomposition propres pour la texture et la surface respectivement.

**20.** Appareil selon la revendication 19, comprenant en outre un comparateur pour utiliser lesdites paires de coefficients de décomposition propres afin de calculer des distances jusqu'aux autres corps géométriques, lesdites distances pouvant comporter un seuil pour ladite correspondance.

**21.** Appareil selon la revendication 20, dans lequel lesdites distances sont des distances euclidiennes pondérées.

**22.** Appareil selon la revendication 1, dans lequel :

ledit convertisseur géodésique comprend une entrée pour recevoir des représentations de corps géométrique sous forme de représentations euclidiennes d'ensembles de distances géodésiques entre des points échantillonnés d'une variété triangulée, lesdites représentations euclidiennes étant sensiblement des représentations invariantes de flexion, et propose :

un calculateur de distance (32) pour calculer des distances entre des corps géométriques respectives en fonction de ladite représentation euclidienne, et
un dispositif de seuil (3 8) pour appliquer un seuil à une distance calculée afin de déterminer la présence ou l'absence d'une correspondance.

**23.** Appareil selon la revendication 22, dans lequel ledit calculateur de distance comprend :

un extracteur de valeur propre (37) pour extraire un nombre prédéterminé de valeurs propres desdites représentations euclidiennes, et
un traceur (39) pour tracer ledit nombre prédéterminé de valeurs propres sous la forme d'un point sur un espace des attributs ayant une dimension pour chacun desdits nombres prédéterminés de valeurs propres,
et dans lequel ledit dispositif de seuil est configuré pour être sensible au groupage dans ledit espace des attributs afin de déterminer ainsi ladite présence ou absence de ladite correspondance.

**24.** Appareil selon la revendication 23, dans lequel ledit nombre prédéterminé est trois.

**25.** Appareil selon la revendication 22, dans lequel ladite représentation euclidienne est basée sur des distances géodésiques entre un sous-échantillonnage de points de ladite variété triangulée.

**26.** Appareil selon la revendication 22, dans lequel ledit corps géométrique est un visage, ayant des régions géométriques molles qui sont des régions susceptibles de subir des changements géométriques à court terme et des régions géométriques dures qui sont des régions sensiblement non susceptibles de subir des changements géométriques à court terme, et dans lequel ladite représentation euclidienne est sensiblement limitée auxdites régions géométriques dures.

27. Appareil selon la revendication 22, dans lequel ledit calculateur de distance est configuré pour utiliser la métrique de Hausdorf.

28. Appareil pour obtenir des données tridimensionnelles d'un corps géométrique pour la correspondance, et utiliser lesdites données pour réaliser la correspondance entre différents corps, dans lequel ledit corps géométrique est un visage, ayant des régions géométriques molles et des régions géométriques dures, ledit appareil comprenant :

un scanner tridimensionnel (12) pour obtenir des données topographiques tridimensionnelles dudit corps ;
un triangulateur (14) pour recevoir lesdites données topographiques tridimensionnelles dudit corps géométrique et former lesdites données en une variété triangulée ;
un convertisseur géodésique (20), raccordé sensiblement audit triangulateur, pour convertir ladite variété triangulée en une série de distances géodésiques entre des paires de points de ladite variété ;
une échelle de comptage multidimensionnelle (22) raccordée sensiblement audit convertisseur géodésique, pour former une représentation euclidienne de petite dimension de ladite série de distances géodésiques, ladite représentation euclidienne de petite dimension fournissant une représentation invariante de flexion dudit corps géométrique ;
un calculateur de distance (32) raccordé sensiblement à ladite échelle de comptage multidimensionnelle pour calculer des distances entre les corps géométriques en fonction de ladite représentation euclidienne ;
un dispositif de seuil (38) raccordé sensiblement audit calculateur de distance, pour appliquer un seuil sur une distance calculée afin de déterminer la présence ou l'absence d'une correspondance ;
un sous-échantillonneur (18) situé entre ledit triangulateur et ledit convertisseur géodésique, configuré pour sous-échantillonner ladite variété triangulée et pour fournir audit convertisseur géodésique une variété triangulée sous-échantillonnée ; et
un préprocesseur (16) positionné entre ledit triangulateur et ledit sous-échantillonneur, pour retirer lesdites régions géométriques molles dudit visage ; dans lequel ledit préprocesseur peut fonctionner pour réaliser le retrait desdites régions molles en appliquant un masque géodésique.

29. Appareil selon la revendication 28, dans lequel ledit calculateur de distance comprend ;
un extracteur de valeurs propres (37) pour extraire un nombre prédéterminé de valeurs propres desdites représentations euclidiennes ; et
un traceur (39) pour tracer ledit nombre prédéterminé de valeurs propres sous la forme d'un point sur un espace des attributs ayant une dimension pour chacun dudit nombre de valeurs propres ; et dans lequel ledit dispositif de seuil est configuré pour être sensible au groupage dans ledit espace des attributs, afin de déterminer ainsi ladite présence ou absence de ladite correspondance.

30. Appareil selon la revendication 29, dans lequel ledit nombre prédéterminé est trois.

31. Appareil selon la revendication 29, dans lequel ledit nombre prédéterminé est supérieur à trois.

32. Appareil selon la revendication 28, dans lequel ledit sous-échantillonneur peut fonctionner pour utiliser des distances géodésiques pour sélectionner des points de ladite variété triangulée afin de les inclure dans ladite variété triangulée sous-échantillonnée.

33. Appareil selon la revendication 32, dans lequel ledit sous-échantillonneur est configuré pour prendre un point initial et ensuite pour sélectionner de manière itérative des points en prenant les points les plus éloignés en termes de distance géodésique des points déjà sélectionnés.

34. Appareil selon la revendication 28, dans lequel ledit corps géométrique est un visage, ayant des régions géométriques molles et des régions géométriques dures, ledit appareil comprenant un préprocesseur, positionné entre ledit triangulateur et ledit convertisseur géodésique pour retirer lesdites régions géométriques molles dudit visage.

35. Appareil selon la revendication 32, dans lequel ledit préprocesseur peut fonctionner pour identifier lesdites régions molles en identifiant un point d'orientation sur ledit visage.

36. Appareil selon la revendication 28, dans lequel ledit point d'orientation est le bout d'un nez.

**37.** Appareil selon la revendication 28, dans lequel le préprocesseur peut en outre fonctionner pour centrer ledit visage.

**38.** Appareil selon la revendication 28, dans lequel ledit préprocesseur peut en outre fonctionner pour cadrer ledit visage.

**39.** Appareil selon la revendication 28, dans lequel ledit convertisseur géodésique peut fonctionner pour utiliser le procédé de marche rapide pour les domaines triangulés afin de calculer lesdites distances géodésiques.

**40.** Appareil selon la revendication 28, dans lequel ledit convertisseur géodésique peut fonctionner pour utiliser le procédé de marche rapide pour les domaines triangulés afin de calculer lesdites distances géodésiques directement à partir des domaines de gradient de variété sans intervenir sur la reconstruction de la surface correspondante.

**41.** Appareil selon la revendication 28, comprenant en outre un dispositif d'optimisation pour permettre à un utilisateur de sélectionner un niveau de sous-échantillonnage optimal en définissant un compromis entre la complexité de calcul et la précision de représentation.

**42.** Appareil selon la revendication 28, dans lequel ledit calculateur de distance est configuré pour utiliser la métrique de Hausdorff

**43.** Procédé pour prétraiter une image de données topographiques tridimensionnelles pour une classification ultérieure, dans lequel ledit corps géométrique est un visage, ayant des régions géométriques molles et des régions géométriques dures, le procédé comprenant les étapes consistant à :

prévoir lesdites données topographiques tridimensionnelles comme étant une variété triangulée tridimensionnelle,
sous-échantillonner ladite variété triangulée,
générer une matrice de distances géodésiques sur des sommets sélectionnés de ladite variété,
retirer lesdites régions géométriques molles dudit visage en appliquant un masque géodésique ; et
utiliser l'échelle de comptage multidimensionnelle pour réduire ladite matrice à une représentation canonique dans un espace euclidien de petite dimension, pour fournir ainsi une représentation appropriée pour la classification ultérieure.

**44.** Procédé selon la revendication 43, comprenant en outre l'étape consistant à sélectionner lesdits sommets pour génér-er ladite matrice de distances géodésiques par une procédure comprenant l'étape consistant à sélectionner de manière itérative un sommet suivant ayant la plus grande distance géodésique par rapport aux sommets déjà sélectionnés, jusqu'à ce qu'un nombre prédéterminé de sommets aient été sélectionnés.

**45.** Procédé selon la revendication 44, comprenant en outre l'étape consistant à déterminer des distances géodésiques pour ladite procédure en utilisant le procédé de marche rapide pour les domaines triangulés.

**46.** Procédé selon la revendication 43, dans lequel lesdites données topographiques tridimensionnelles sont une représentation d'un visage, et comprenant en outre l'étape consistant à cadrer ledit visage pour exclure des parties dudit visage qui sont susceptibles de subir des changements à court terme, afin de rendre ainsi ladite classification ultérieure sensiblement invariable audit changement à court terme.

**47.** Procédé pour classer des données tridimensionnelles de corps tridimensionnels ayant des surfaces, dans lequel lesdits corps tridimensionnels comprennent des visages ayant des régions géométriques molles et des régions géométriques dures, le procédé comprenant les étapes consistant à :

obtenir des représentations desdits corps tridimensionnels sous forme de représentations canoniques dérivées des distances géodésiques entre les points d'échantillon sélectionnés pris à partir desdites surfaces desdits corps tridimensionnels ;
retirer lesdites régions géométriques molles dudit visage en appliquant un masque géodésique ;
à partir de chaque représentation, dériver des coordonnées sur un espace des attributs ; et
classer lesdits corps selon le groupage sur ledit espace des attributs.

**48.** Procédé selon la revendication 47, dans lequel ladite étape consistant à dériver des coordonnées comprend l'étape consistant à dériver les premières m valeurs propres des représentations respectives de forme canonique, où n est un nombre prédéterminé, et utiliser lesdites m valeurs propres pour fournir lesdites coordonnées, ledit espace des attributs étant construit pour avoir n dimensions.

**49.** Procédé selon la revendication 48, dans lequel n est au moins trois.

**50.** Procédé selon la revendication 48, dans lequel n est trois.

EP 1 550 082 B1

Fig. 1

12 —————→ 3D scanner ————→ face

14 ——— triangulator

10 ——→ Preprocessor ——— 16

Subsampler ——— 18

Geodesic converter —— 20

Multi-dimensional scaler —— 22

Canonical form representation of 3D face —— 24

Fig. 2

EP 1 550 082 B1

# Fig. 3

Fig. 4a   44   Fig. 4b

46

48

Fig. 5

EP 1 550 082 B1

VIEWER

LIGHT $i$

52

Fig. 6

50

$\rho(x,y)$

$x$

$y$

Fig. 7

Fig. 8

Fig. 9

EP 1 550 082 B1

EP 1 550 082 B1

```
                    ┌─────────────────────┐
                    │     Subsampled      │ ──────── 80
                    │   manifold points   │
                    └─────────────────────┘
                               │
                               ▼
    ┌──────────────────────────────────────────────────┐
    │                                                   │
    │            Geodesic converter                     │ ──── 20
    │                                                   │
    │         ┌───────────────────────────┐             │
    │         │      Take each vertex      │            │
    │         └───────────────────────────┘             │
    │                      │                            │
    │         ┌───────────────────────────┐             │
    │         │        Apply FMM           │            │
    │         └───────────────────────────┘             │
    │                      │                            │
    │    ┌──────────────────────────────────────────┐   │
    │    │        Obtain nxn dissimilarity          │   │
    │    │     matrix of geodesic distances         │   │
    │    └──────────────────────────────────────────┘   │
    └──────────────────────────────────────────────────┘
```

Fig. 10

EP 1 550 082 B1

```
          ┌────────────────────────────────┐
          │        Collect 3D info         ├──── S1
          └────────────────────────────────┘
                         │
                         ▼
┌──── S2 ──── ┌────────────────────────────────┐
             │       Collect albedo info       │
              └────────────────────────────────┘
                         │
                         ▼
          ┌────────────────────────────────────────┐
          │     Convert to triangulated manifold    ├──── S3
          └────────────────────────────────────────┘
                         │
                         ▼
   S4 ──── ┌────────────────────────────────────────┐
          │         Remove soft parts of face        │
           └────────────────────────────────────────┘
                         │
                         ▼
          ┌────────────────────────────────────────┐
          │               subsample                  ├──── S5
          └────────────────────────────────────────┘
                         │
                         ▼
 S6 ──── ┌──────────────────────────────────────────────────────────────┐
         │ Compute matrix of geodesic distances between each pair of      │
         │                    subsample points                            │
         └──────────────────────────────────────────────────────────────┘
                         │
                         ▼
       ┌──────────────────────────────────────────────────────────────────┐
       │ Use multi-dimensional scaling to form low dimensional Euclidean    ├──── S7
       │      rep. of sub-sampled surface – canonical form                  │
       └──────────────────────────────────────────────────────────────────┘
                         │
                         ▼
 S8 ──── ┌──────────────────────────────────────────────────────────────────┐
         │ Compare with other faces by measuring distances between canonical  │
         │           forms/ canonical surface movements                       │
         └──────────────────────────────────────────────────────────────────┘
```

Fig. 11

```
┌─────────────────────────┐
│   Take preprocessed     │——— S5.1
│      manifold           │
└─────────────────────────┘
             │
             ▼
┌───────────────────────────────────┐
│ Select no. of subsamples –tradeoff │——— S5.2
│   Between accuracy & complexity    │
└───────────────────────────────────┘
                 │
                 ▼
┌─────────────────────────────┐
│  Apply Voronoi sampling using │——— S5.3
│   FMM-TD between points       │
└─────────────────────────────┘
```

Fig.12

Fig. 13

Fig. 14

Fig.15

EP 1 550 082 B1

Fig. 16

Fig. 17

Fig. 18a          Fig. 18b          Fig. 18c

Fig. 19

EP 1 550 082 B1

Fig. 20

Fig. 21

Fig. 22

52

EP 1 550 082 B1

Fig. 23

Fig. 24

Fig. 25

Fig. 26

Fig. 27

Fig. 28

Fig. 30

Fig. 31

Fig. 29

Fig. 32

EP 1 550 082 B1

Fig. 33

Fig. 34

EP 1 550 082 B1

Fig. 35

Fig. 36

(0°, 0°) 36A  (0°, -20°) 36B  (0°, +20°) 36C  (-25°, 0°) 36D  (+25°, 0°) 36E

Fig. 37A

EP 1 550 082 B1

EP 1 550 082 B1

S140 — Acquire surface gradient

S142 — Preprocess

S144 — FMTD from n vertices →
nxn distance dissimilarity matrix

S146 — MDS to distance matrix →
low dimension canonical form

Compare canonical form with others to find match

S148 —

Fig. 37B

Fig. 38

O SUBJECT 1  ■ SUBJECT 4  △ SUBJECT 7

O SUBJECT 2  △ SUBJECT 5

O SUBJECT 1  △ SUBJECT 7

Fig. 39

EP 1 550 082 B1

Fig. 40

Flowchart:
- Obtain 3D data — S150
- Range → triangulated surface — S152
- Smooth by splining — S154
- Crop to facial contour — S156
- decimate — S158
- low dim. Canonical form — S160
- To Fig. 41

From Fig. 40

S162 — Map texture onto canonical form of range

S164 — Interpolate mapping onto Cartesian grid

S166 — Separate eigendecomposition for texture and range data

S168 — Compare with other faces using Euclidian Distance between decomposition coeffs.

Fig. 41

EP 1 550 082 B1

TEXTURE FLATTENING

THE FLATTENED TEXTURE AND
THE CANONICAL IMAGE

A  B  C  D

Fig. 42

EP 1 550 082 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5164992 A

- WO 0118563 A

**Non-patent literature cited in the description**

- **M. Turk ; A. Pentland.** Face recognition using eigenfaces. *CVPR,* May 1991, 586-591
- **G. Gordon.** Face recognition from frontal and profile views. *Proc. of the International Workshop on Face and Gesture Recognition,* June 1995, 47-52
- **C. Beumier ; M. P. Acheroy.** Automatic Face Identification. *Applications of Digital Image Processing XVIII, SPIE,* July 1995, vol. 2564, 311-323
- Automatic Face Authentication from 3D Surface. **C. Beumier ; M. P. Acheroy.** British Machine Vision Conference BMVC 98. University of Southampton UK, 14 September 1998, 449-458
- **J.-Y. Bouguet ; P. Perona.** 3D photography on your desk. *Proc. of the Int. Conf. on Computer Vision,* January 1998
- **G. Zigelman ; R. Kimmel.** Fast 3D laser scanner. *Dept. of Computer Science, Technion - Israel Institute of Technology, Tech. Rep.,* 2000
- A low cost 3D scanner based on structured light. **C. Rocchini ; P. Cignoni ; C. Montani ; P. Pingi ; R. Scopigno.** EUROGRAPHICS. 2001, vol. 20
- CISM Journal ACSGC. Spring, 1991, vol. 45, 65-80
- **J. A. Sethian.** A fast marching level set method for monotonically advancing fronts. *Proc. Nat. Acad. Sci.,* 1996, vol. 93, 4
- **G. Zigelman ; R. Kimmel ; N. Kiryati.** Texture mapping using surface flattening via multi-dimensional scaling. *IEEE Trans. on Visualization and Computer Graphics,* 2001
- **R. Grossmann ; N. Kiryati ; R. Kimmel.** Computational surface flattening: A voxel-based approach. *IEEE Trans. on PAMI,* 2001
- **A. Elad ; R. Kimmel.** Bending invariant representations for surfaces. *Proc. of CVPR'01 Hawaii,* December 2001
- **M. Proesmans ; L. Van Gool ; A. Oosterlinck.** One-Shot Active Shape Acquisition. *Proc. Internat. Conf. Pattern Recognition, Vienna,* 1996, vol. C, 336-340

- Shape from 2D Edge Gradients, Pattern Recognition. **S. Winkelbach ; F. M. Wahl.** Lecture Notes in Computer Sciences. Springer, 2001, vol. 2191, 377-384
- Shape from Single Stripe Pattern Illumination. **S. Winkelbach ; F. M. Wahl.** Pattern Recognition (DAGM 2002), Lecture Notes in Computer Science. Springer, 2002, vol. 2449, 240-247
- **O. D. Faugeras ; M. Hebert.** A 3D recognition and positioning algorithm using geometrical matching between primitive surfaces. *Proc. 7th Int'l Joint Conf. on Artificial Intelligence,* 1983, 996-1002
- The free form matching problem. **P. J. Besl.** Machine vision for threedimensional scene. Academic, 1990
- **G. Barequet ; M. Sharir.** Recovering the position and orientation of free-form objects from image contours using 3D distance map. *IEEE Trans. PAMI,* vol. 19 (9), 929-948
- **E. L. Schwartz ; A. Shaw ; E. Wolfson.** A numerical solution to the generalized mapmaker's problem: flattening non-convex polyhedral surfaces. *IEEE Trans. PAMI,* 1989, vol. 11, 1005-1008
- **G. Zigelman ; R. Kimmel ; N. Kiryati.** Texture mapping using surface flattening via multi-dimensional scaling. *IEEE Trans. Visualization and Comp. Graphics,* 2002, vol. 8, 198-207
- **R. Grossman ; N. Kiryati ; R. Kimmel.** Computational surface flattening: a voxel-based approach. *IEEE Trans. PAMI,* 2002, vol. 24, 433-441
- **A. Elad ; R. Kimmel.** Bending invariant representations for surfaces. *Proc. CVPR,* 2001, 168-174
- **I. Borg ; P. Groenen.** Modem multidimensional scaling - theory and applications. Springer, 1997
- **G. Young ; G. S. Householder.** Discussion of a set of points in terms of their mutual distances. *Psychometrika,* 1938, vol. 3, 19-22
- **A. Tal ; M. Elad ; S. Ar.** Content based retrieval of VRML objects - an iterative and interactive approach. *EG Multimedia,* 2001, vol. 97, 97-108

- **J. Sethian ; A. Vladimirsky.** Technical Report PAM 792 (UCB), Center for Pure and Applied Mathematics. *SIAM Journal on Numerical Analysis,* July 2001
- **F. M'moli ; G. Sapiro.** Fast computation of weighted distance functions and geodesics on implicit hyper-surfaces. *Journal of Computational Physics,* 2001, vol. 173 (2), 730-764
- **J. A. Sethian.** A review of the theory, algorithms, and applications of level set method for propagating surfaces. *Acta numerica,* 1996, 309-395
- **R. Kimmel ; J. A. Sethian.** Computing geodesic on manifolds. *Proc. US National Academy of Science,* 1998, vol. 95, 8431-8435